(19) Europäisches Patentamt
European Patent Office
Office européen des brevets

(11) **EP 4 492 846 A1**

(12) **EUROPEAN PATENT APPLICATION**
published in accordance with Art. 153(4) EPC

(43) Date of publication:
**15.01.2025 Bulletin 2025/03**

(21) Application number: **23766913.0**

(22) Date of filing: **09.03.2023**

(51) International Patent Classification (IPC):
*H04W 16/14* (2009.01)     *H04B 7/06* (2006.01)
*H04W 16/28* (2009.01)     *H04W 28/16* (2009.01)
*H04W 52/24* (2009.01)

(52) Cooperative Patent Classification (CPC):
H04B 7/06; H04W 16/14; H04W 16/28;
H04W 28/16; H04W 52/24

(86) International application number:
**PCT/JP2023/008971**

(87) International publication number:
**WO 2023/171737 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.03.2022 JP 2022037578**

(71) Applicant: **Sony Group Corporation
Tokyo 108-0075 (JP)**

(72) Inventor: **FURUICHI Sho
Tokyo 108-0075 (JP)**

(74) Representative: **Witte, Weller & Partner
Patentanwälte mbB
Postfach 10 54 62
70047 Stuttgart (DE)**

(54) **COMMUNICATION CONTROL DEVICE, COMMUNICATION DEVICE, COMMUNICATION CONTROL METHOD, AND COMMUNICATION METHOD**

(57)     [Problem] Spectrum use efficiency is effectively improved while protected entities are protected from radio interference.

[Solution] A communication control device of the present disclosure includes a processing unit that: determines a first interference margin that is an amount of interference that is acceptable to be given to a protected entity by at least one group of a plurality of communication devices, based on a cumulative acceptable amount of interference of the protected entity; and determines a plurality of second interference margins that are amounts of interference that are acceptable to be given to the protected entity by the plurality of communication devices by allocating the first interference margin among the plurality of communication devices in the group.

Fig. 14

**Description**

[Technical Field]

The present disclosure relates to a communication control device, a communication device, a communication control method, and a communication method.

[Background Art]

A problem of depletion of radio wave resources (frequencies) that can be allocated to wireless systems has surfaced. As a means for generating necessary radio wave resources, "dynamic spectrum access (DSA)" in which temporal and spatial vacancies (white space) in a frequency band allocated to a specific wireless system are utilized is rapidly attracting attention.

The requirement standard WINNF-TS-0112 for Citizens Broadband Radio Service (CBRS) Baseline Standards Release 1 formulated by the Wireless Innovation Forum (see NPL 1) specifies, as one of the interference protection algorithms for Spectrum Access Systems (SASs), the Iterative Allocation Process (IAP) in which Protected Entities include Fixed Satellite Service (FSS) earth stations, PAL Protection Areas (PPAs), and Grandfathered Wireless Protection Zones (GWPZs).

IAP is a technique for managing a grant for spectrum use given by an SAS to a Citizens Broadband Radio Service Device (CBSD), which is a communication device in CBRS. In IAP, an interference budget given from each CBSD to a protected entity based on a grant given to the CBSD by the SAS is estimated as a "desired interference margin". Based on the desired interference margin from each grant and an interference threshold of a protected entity (i.e., a total acceptable amount of interference), it is determined whether or not the desired interference margin can be allocated to each CBSD on a grant-by-grant basis. If the total amount of desired interference margins (amounts of interference) from the CBSDs to the protected entity is equal to or less than the interference threshold, the desired interference margin of each CBSD is allocated to the CBSD, without being changed. On the other hand, if the total amount is greater than the interference threshold, the desired interference margin is adjusted for each CBSD so that the total amount of interference from the CBSDs is equal to or less than the interference threshold. The adjusted interference margin

(allocated interference margin) is allocated to each CBSD. A grant has been associated with operational parameters, such as a frequency range and a maximum EIRP (unit: dBm/MHz). The frequency range can include one frequency (channel) or a plurality of frequencies (channels). For a grant allocated the desired interference margin, the operational parameters can continue to be used, but for a grant allocated an interference margin below the desired interference margin, processing of correcting the maximum EIRP is typically performed.

WInnForum CBRS Release 1 also allows a mechanism to reallocate the interference margin allocated as a result of IAP among a plurality of specific CBSDs. The plurality of specific CBSDs are defined as an Interference Margin Group (IMG). Each CBSD User (corresponding to a network operator) can configure a plurality of CBSDs as one group (IMG). Although this mechanism is useful in terms of flexibility in EIRP configuration, it has the following drawbacks.

The above-described reallocation mechanism is established by a contract between the SAS administrator (the SAS operating company) and the CBSD User (the network operator), and therefore, the SAS needs to be implemented to only follow the policies set out in the contract. Even if any changes are made in the policies, the changes cannot be immediately reflected in the SAS. In other words, it takes time for the changes to be reflected in the SAS.

In addition, the policy for reallocating interference margins may depend heavily on the network planning and deployment of the CBSDs. In other words, at the SAS side, not only may different SAS implementations and behaviors be required for a plurality of CBSD users, but different implementations and behaviors may be required for each CBSD user depending on the location and the like. In addition, the IMG is not defined as group information specified in the SAS-CBSD protocol (see NPL 6). Depending on the contents of the contract, information exchange between an SAS and a CBSD may be required, which is a problem in terms of interworking and interoperability between the SAS and the CBSD.

[Citation List]

[Non Patent Literature]

[NPL 1]
WINNF-TS-0112-V1.9.1 "Requirements for Commercial Operation in the U.S. 3550-3700 MHz Citizens Broadband Radio Service Band"
[NPL 2]

Electronic Code of Federal Regulations, Title 47, Chapter I, Subchapter A, Part 1, Subpart X Spectrum Leasing [available at https:// ecfr.federalregister.gov/current/title-47/chapter-I/subchapter-D/part-96]
[NPL 3]
WINNF-TS-0061-V1.5.1 Test and Certification for Citizens Broadband Radio Service (CBRS); Conformance and Performance Test Technical Specification; SAS as Unit Under Test (UUT) [available at https:// cbrs.wirelessinnovation.org/release-1-of-the-baseline-standard-specifications]
[NPL 4]
WINNF-TS-0016-V1.2.4 Signaling Protocols and Procedures for Citizens Broadband Radio Service (CBRS): Spectrum Access System (SAS) - Citizens Broadband Radio Service Device (CBSD) Interface Technical Specification [available at https:// cbrs.wirelessinnovation.org/release-1-of-the-baseline-standard- sp ecifications]
[NPL 5]
940660 D02 CBSD Handshake Procedures v02 [available at https:// apps.fcc.gov/kdb/GetAttachment.html?id=RQe7oZJVSWt0fCcNiBV%2Bfw%3D%3        D&desc=940660%20D02%20CPE-CBSD%20Handshake%20Procedures%20v02&tracking_number=229297]
[NPL 6]
WINNF-TS-0016-V1.2.5 "Signaling Protocols and Procedures for Citizens Broadband Radio Service (CBRS); Spectrum Access System (SAS) - Citizens Broadband Radio Service Device (CBSD) Interface Technical Specification
[NPL 7]
WINNF-TS-3002-V1.0.0 "Signaling Protocols and Procedures for Citizens Broadband Radio Service (CBRS); Extensions to Spectrum Access System (SAS) - Citizens Broadband Radio Service Device (CBSD) Interface Technical Specifications (Release 2)"
[NPL 8]
CBRSA-TS-2001, "CBRS Alliance Coexistence Technical Specifications"

[Summary]

[Technical Problem]

In view of the above problems, an object of the present disclosure is to effectively improve spectrum use efficiency while appropriately protecting protected entities from radio interference.

[Solution to Problem]

A communication control device of the present disclosure includes a processing unit that: determines a first interference margin that is an amount of interference that is acceptable to be given to a protected entity by at least one group of a plurality of communication devices, based on a cumulative acceptable amount of interference of the protected entity; and determines a plurality of second interference margins that are amounts of interference that are acceptable to be given to the protected entity by the plurality of communication devices by allocating the first interference margin among the plurality of communication devices in the group.

[Brief Description of Drawings]

[Fig. 1]

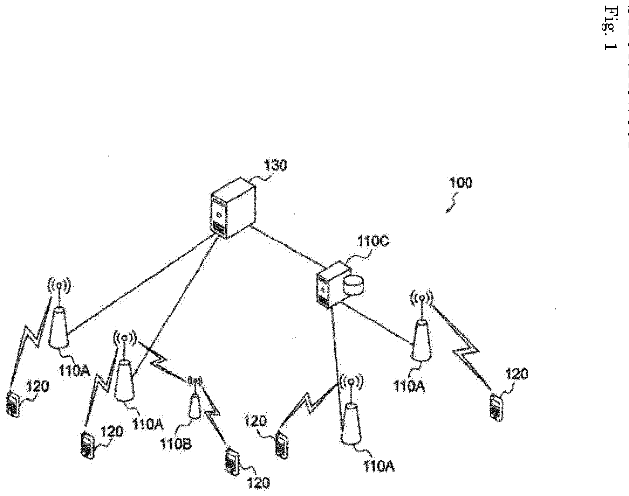

Fig. 1 is a diagram illustrating a system model in an embodiment of the present disclosure.
[Fig. 2]

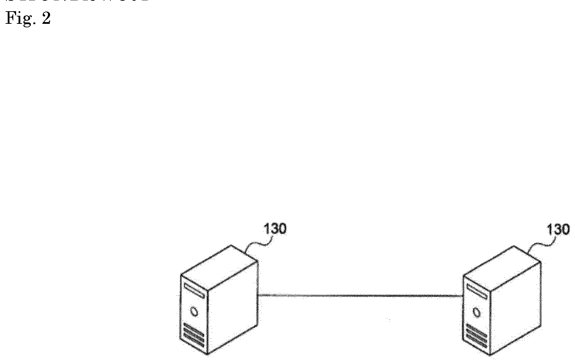

Fig. 2 illustrates a network configuration to which autonomous decision-making can be applied.
[Fig. 3]

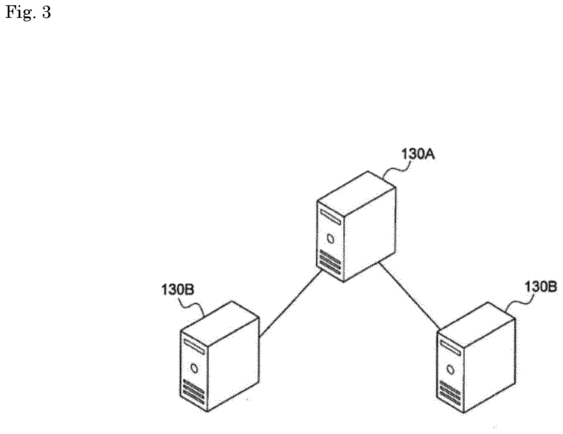

Fig. 3 illustrates a network configuration to which centralized decision-making can be applied.
[Fig. 4]

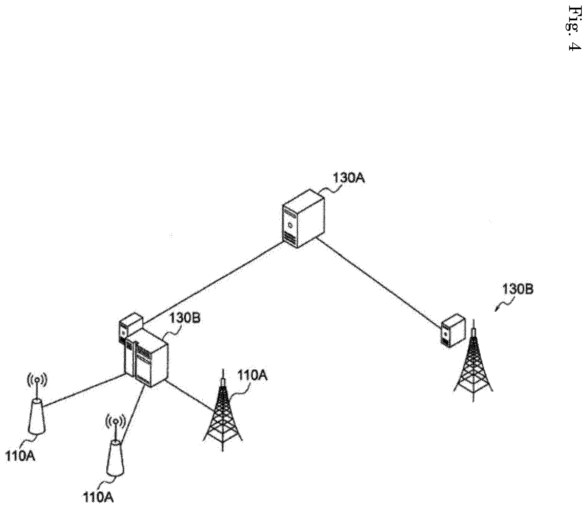

Fig. 4 illustrates a network configuration in a case in which both centralized decision-making and distributed decision-making are applied.
[Fig. 5]

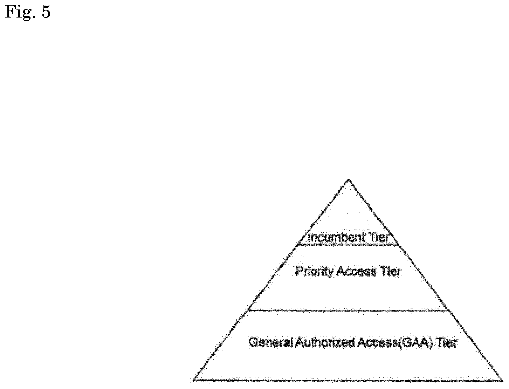

Fig. 5 is a diagram illustrating a 3-tier structure in CBRS.
[Fig. 6]

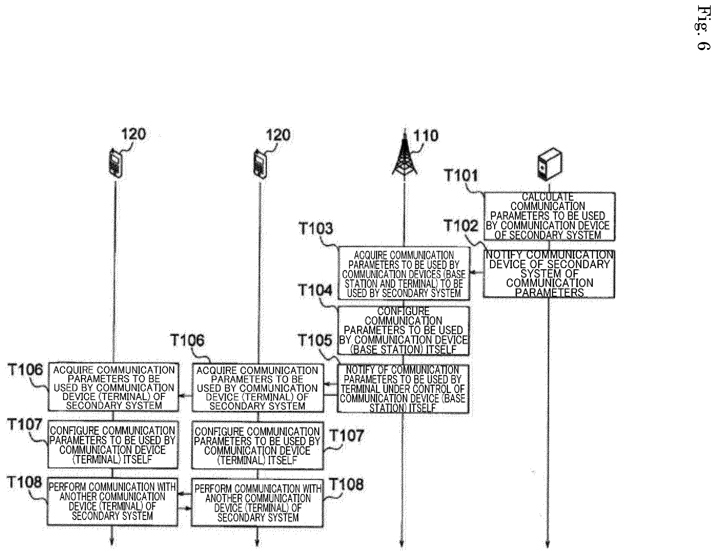

Fig. 6 is a diagram illustrating a flow of signaling between terminals.

[Fig. 7]

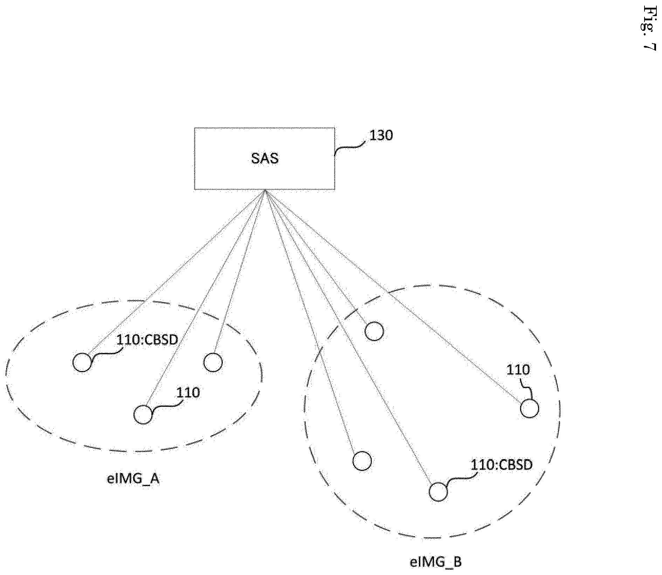

Fig. 7 illustrates an overall configuration diagram of a communication system according to the embodiment.

[Fig. 8]

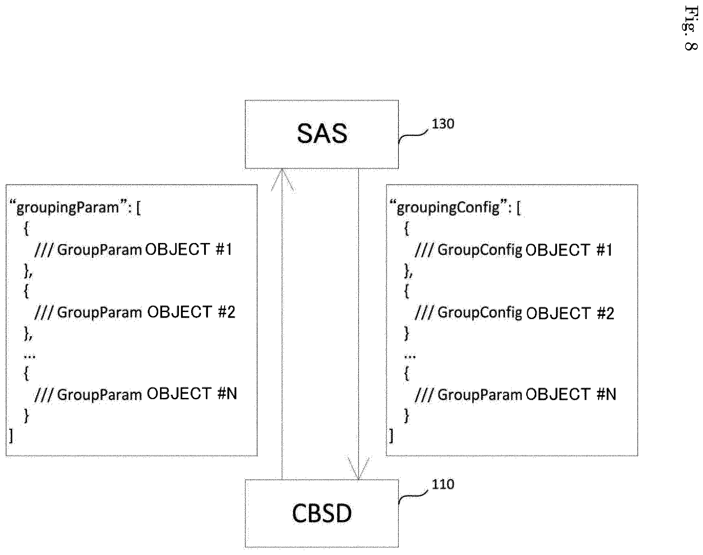

Fig. 8 is a diagram illustrating a sequence example of parameter exchange between CBSD and SA0.

[Fig. 9]

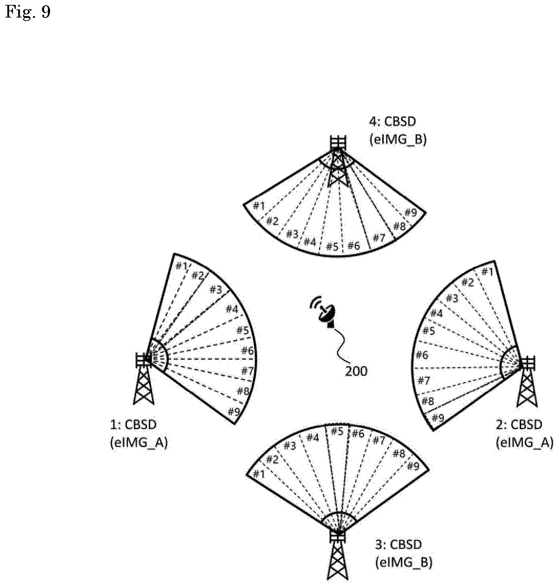

Fig. 9 illustrates an example in which four CBSDs are grouped into two.

[Fig. 10]

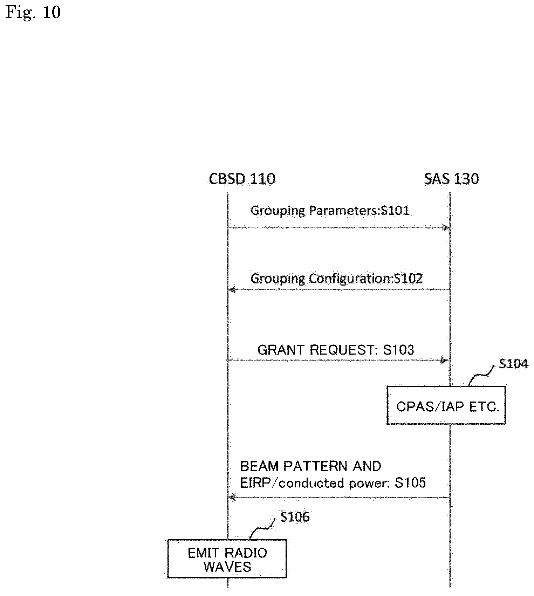

Fig. 10 is a sequence diagram illustrating an example of an operation according to a first embodiment.

[Fig. 11]

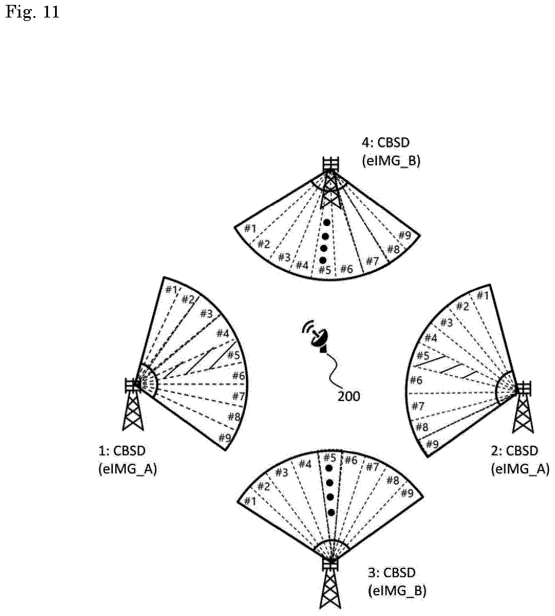

Fig. 11 is a diagram illustrating an example of beam patterns that maximize the sum of the desired interference margins of two CBSDs.

[Fig. 12]

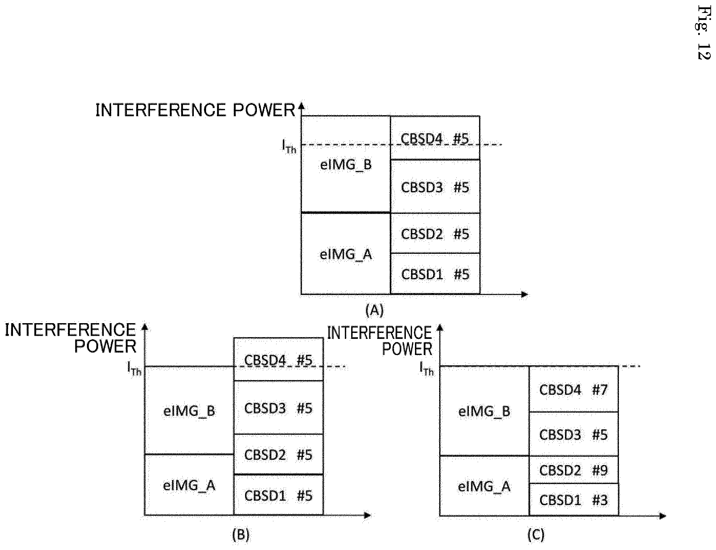

Fig. 12 is a diagram illustrating a calculation example of IAP.

[Fig. 13]

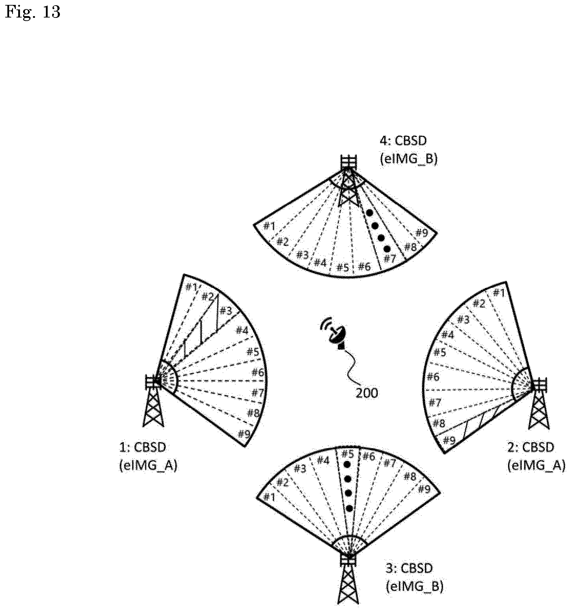

Fig. 13 is a diagram illustrating an example of a combination of beam patterns determined for the CBSDs.

[Fig. 14]

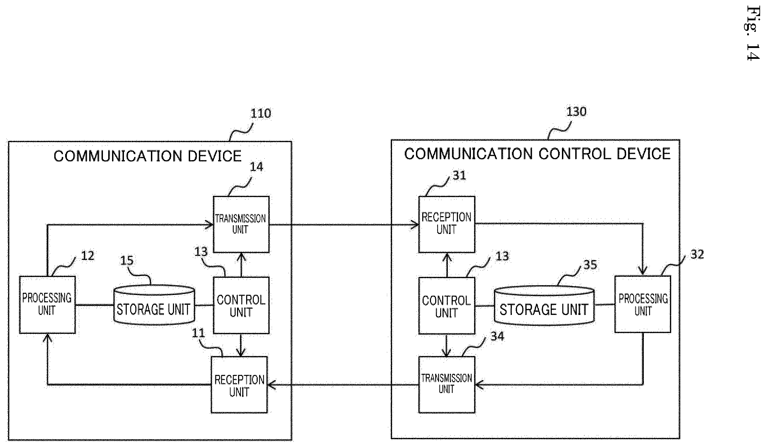

Fig. 14 is a block diagram of a communication system according to the first embodiment or a second embodiment.

[Fig. 15]

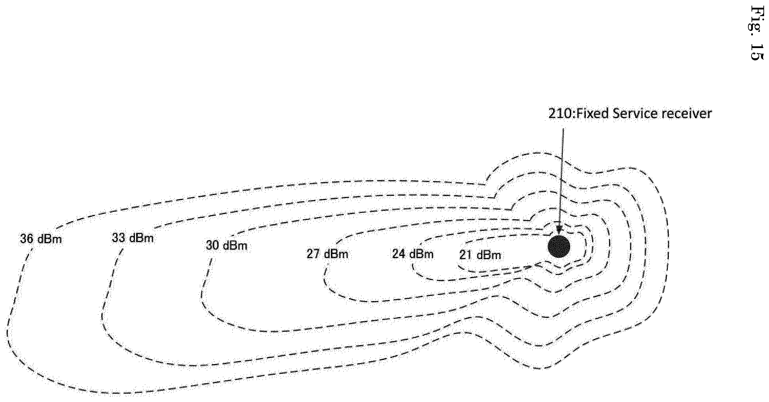

Fig. 15 illustrates an example of co-channel/adjacent channel exclusion zones for the protection of a protected entity.

[Fig. 16]

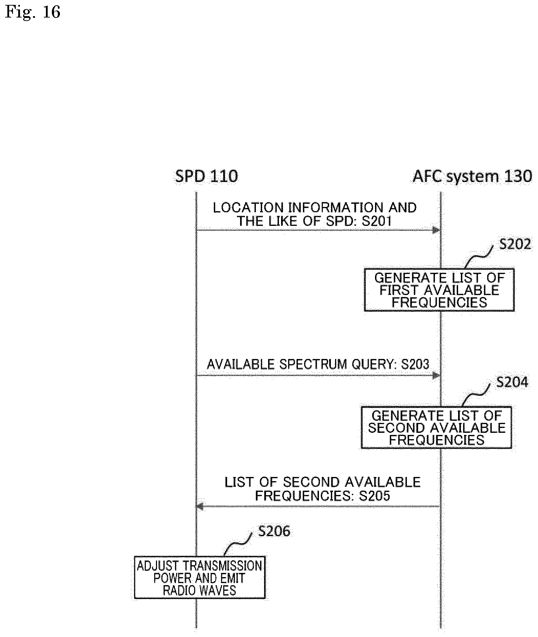

Fig. 16 is a diagram illustrating a basic sequence of an operation according to the second embodiment.

[Fig. 17]

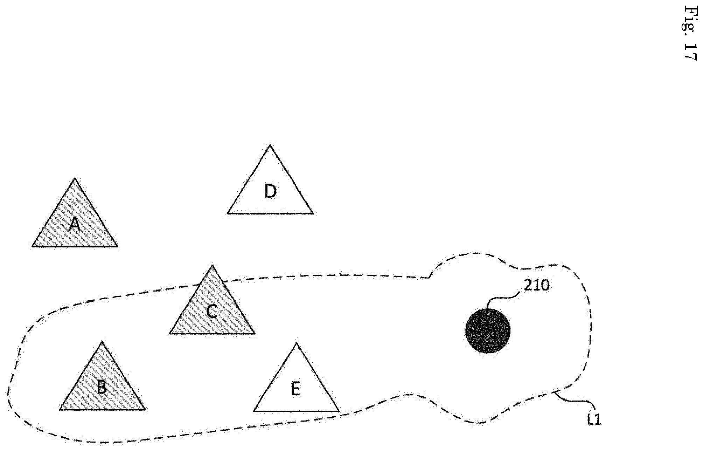

Fig. 17 is a diagram illustrating a specific example of the operation of the second embodiment.

[Description of Embodiments]

Hereinafter, embodiments of the present disclosure will be described with reference to the drawings. In one or more embodiments described in the present disclosure, the elements included in each embodiment can be combined with each other, and the combined result is also part of the embodiments described in the present disclosure.

«1. Assumed Representative Scenario»

<1.1 System Model>

Fig. 1 illustrates a system model in an embodiment of the present invention. This system model is represented by a communication network 100 including wireless communication, as illustrated in Fig. 1, and is typically configured of the following entities.

- Communication device 110
- Terminal 120
- Communication control device 130

In addition, this system model includes at least a primary system and a secondary system that use the communication network 100. The primary system and the secondary system are configured by the communication device 110 or by the communication device 110 and the terminal 120. Although various communication systems can be handled as a primary system or a secondary system, it is assumed in the present embodiment that a primary system and a secondary system use some or all of frequency bands. Frequency bands assigned to the primary system and the secondary system may partially or wholly overlap, or may not overlap at all. Accordingly, this system model will be described as a model of a wireless communication system regarding dynamic spectrum access (DSA). This system model is not limited to systems related to dynamic spectrum access.

The communication device 110 is typically a wireless device that provides a wireless communication service to the terminal 120, such as a wireless base station (base station, Node B, eNB, gNB, or the like) or a wireless access point. In other words, the communication device 110 provides a wireless communication service to enable wireless communication of the terminal 120. Further, the communication device 110 may be a wireless relay device or an optical extension device called a remote radio head (RRH). In the following description, unless otherwise prescribed, the communication device 110 is an entity constituting the secondary system.

A coverage (communication area) provided by the communication device 110 is allowed to have various sizes, from a large one like a macrocell to a small one like a picocell. A plurality of communication devices 110 may form one cell like a distributed antenna system (DAS). Further, if the communication device 110 has beamforming capability, a cell or a service area may be formed for each beam.

In the present disclosure, it is assumed that there are two different types of communication devices 110.

In the present disclosure, the communication device 110 that can access the communication control device 130 without using a wireless path that requires a grant of the communication control device 130 is referred to as a "communication device 110A". Specifically, for example, a communication device 110 capable of connecting to the Internet by wire can be regarded as the "communication device 110A". Further, for example, a wireless relay device that does not have a wired Internet connection function may also be regarded as the "communication device 110A" if a wireless backhaul link using a frequency that does not require a grant of the communication control device 130 is established between the radio wireless device and another communication device 110A.

In the present disclosure, a communication device 110 that cannot access the communication control device 130 without a wireless path that requires a grant of the communication control device 130 is referred to as a "communication device 110B". For example, a wireless relay device that needs to establish a backhaul link using a frequency that requires a grant of the communication control device 130 can be regarded as the "communication device 110B". Further, for example, a device such as a smartphone having a wireless network provision function represented by tethering and using a frequency that requires a grant of the communication control device 130 in both a backhaul link and an access link may be handled as the "communication device 110B".

The communication device 110 does not necessarily need to be fixedly installed. For example, the communication device 110 may be installed in a moving object such as an automobile. Further, the communication device 110 does not necessarily need to be present on the ground. For example, the communication device 110 may be provided on an object present in the air or space, such as an aircraft, a drone, a helicopter, a high altitude platform station (HAPS), a balloon, or a satellite. Further, the communication device 110 may be provided on an object on or under the sea, such as a ship, a submarine, or the like, for example. Typically, such a mobile communication device 110 corresponds to the communication device 110B and secures an access route to the communication control device 130 by performing wireless communication with a communication device 110A. As a matter of course, if the frequency used for wireless communication with the communication device 110A is not managed by the communication control device 130, nevertheless the mobile communication device 110 can be handled as the communication device 110A.

In the present disclosure, description of "communication device 110" encompasses the meaning of both the communication device 110A and the communication device 110B and may be read as either, unless otherwise specified.

The communication device 110 may be used, operated, or managed by various operators. For example, a mobile network operator (MNO), a mobile virtual network operator (MVNO), a mobile network enabler (MNE), a mobile virtual network enabler (MVNE), a shared facility operator, a neutral host network (NHN) operator, a broadcaster, an enterprise, educational institution (school corporation, local government board of education, or the like), real estate (building, condominium, or the like) administrator, an individual, or the like can be assumed to be operators involved in the communication device 110. Operators regarding the communication device 110 are not particularly limited. Further, the communication device 110A may be a common facility used by a plurality of operators. Further, operators who install, use, operate, and manage a facility may be different from each other.

The communication device 110 operated by an operator is typically connected to the Internet via a core network. In addition, operation, management, and maintenance are performed by a function called OA&M (Operation, Administration & Maintenance). Further, for example, as illustrated in Fig. 1, there may be an intermediate device (network manager) 110C that integrally controls the communication devices 110 in a network. The intermediate device may be the communication device 110 or may be the communication control device 130.

The terminal 120 (user equipment, user terminal, user station, mobile terminal, mobile station, or the like) is a device that performs wireless communication through the wireless communication service provided by the communication device 110. Typically, communication equipment such as a smartphone corresponds to the terminal 120. Any device having a wireless communication function can correspond to the terminal 120. For example, equipment such as a camera for business use that has a wireless communication function may correspond to the terminal 120 even if wireless communication is not a main purpose. In addition, communication equipment that transmits data to the terminal 120, such as a field pickup unit (FPU) that transmits images for television broadcasting, and the like from the outside of a broadcasting station (site) to the broadcasting station in order to perform sports relay and the like, also corresponds to the terminal 120. Further, the terminal 120 does not necessarily need to be used by a person. For example, like so-called machine type communication (MTC), equipment such as a machine in a factory or a sensor installed in a building may be network-connected and operate as the terminal 120. Further, equipment called customer premises equipment (CPE) provided to ensure Internet connection may serve as the terminal 120.

Further, the terminal 120 may have a relay communication function, as typified by device-to-device (D2D) or vehicle-to-everything (V2X).

Further, similarly to the communication device 110, the terminal 120 does not necessarily need to be fixedly installed or present on the ground. For example, an object present in the air or space, such as an aircraft, a drone, a helicopter, or a satellite, may operate as the terminal 120. Further, for example, an object present on or under the sea, such as a ship or a submarine, may operate as the terminal 120.

In the present disclosure, the terminal 120 corresponds to an entity that terminates a wireless link using a frequency that requires a grant of the communication control device 130 unless otherwise specified. However, the terminal 120 can operate in the same manner as the communication device 110 depending on functions of the terminal 120 and a network topology applied thereto. In other words, depending on the network topology, a device such as a wireless access point that can correspond to the communication device 110 may correspond to the terminal 120, and a device such as a smartphone that can correspond to the terminal 120 may correspond to the communication device 110.

The communication control device 130 is typically a device that makes a determination, a grant, an indication, and/or management of communication parameters for the communication device 110. For example, database servers called TV White Space Database (TVWSDB), Geolocation Database (GLDB), Spectrum Access System (SAS), and Automated Frequency Coordination (AFC) correspond to the communication control device 130. In other words, a database server having the authority and role such as authentication and supervision of radio wave use related to secondary use of frequencies can be regarded as the communication control device 130.

The communication control device 130 also corresponds to a database server having a role different from the above-described role. For example, a control device that performs radio wave interference control between communication devices, represented by a spectrum manager (SM) in EN 303 387 of European Telecommunications Standards Institute (ETSI), a coexistence manager (CM) in Institute of Electrical and Electronics Engineers (IEEE) 802.19.1-2018, a coexistence manager (CxM) in CBRSA-TS-2001, or the like, also corresponds to the communication control device 130. Further, for example, a registered location secure server (RLSS) specified by IEEE 802.11-2016 also corresponds to the communication control device 130. Thus, the entity in charge of making a determination, a grant, an indication, management, and the like of communication parameters for the communication device 110 may be called the communication control device 130 without being limited to these examples. Basically, a control target of the communication control device 130 is the communication device 110, but the communication control device 130 may control the terminal 120 under the control of the communication device 110.

The communication control device 130 also corresponds to a combination of a plurality of database servers having different roles. For example, CBRS Alliance SAS (CSAS), which is a combination of the SAS and CxM in CBRSA-TS-2001, can also be regarded as the communication control device 130.

The communication control device 130 can also be realized by implementing software having functions equivalent to those of the above-described database servers for one database server. For example, an SAS having CxM-equivalent functions or software can also be regarded as the communication control device 130.

A plurality of communication control devices 130 having similar roles may be present. When there are a plurality of communication control devices 130 having similar roles, at least one of the following three types of decision-making topologies can be applied to the communication control devices 130.

- Autonomous Decision-Making
- Centralized Decision-Making
- Distributed Decision-Making

Autonomous decision-making is a decision-making topology in which an entity that performs decision-making (decision-making entity, the communication control device 130 here) makes a decision independently of another decision-making entity. The communication control device 130 independently performs necessary frequency allocation and interference control calculation. For example, when a plurality of communication control devices 130 are distributed as illustrated in Fig. 2, autonomous decision making can be applied.

Centralized decision-making is a decision-making topology in which a decision-making entity delegates decision-making to another decision-making entity. When centralized decision-making is performed, for example, a model such as that illustrated in Fig. 3 is assumed. Fig. 3 illustrates a model (so-called a master-slave type) in which one communication control device 130 centrally controls a plurality of communication control devices 130. In the model of Fig. 3, a master communication control device 130A can control a plurality of slave communication control devices 130B and make decisions intensively.

Distributed decision-making is a decision-making topology in which a decision-making entity cooperates with another decision-making entity to make decisions. For example, the plurality of communication control devices 130 make decisions independently as in the autonomous decision-making in Fig. 2, each communication control device 130 making a decision and then performing mutual adjustment of decision-making results, negotiation, and the like may correspond to the "distributed decision-making". For example, the communication control device 130A of the master, for example, dynamically delegating a decision-making authority to each slave communication control device 130B or discarding the decision-making authority for the purpose of load distribution (load balancing), or the like in the centralized decision-making of Fig. 3 can also be regarded as the "distributed decision-making".

Both the centralized decision-making and the distributed decision-making may be applied. In Fig. 4, a slave communication control device 130B operates as an intermediate device that bundles a plurality of communication devices 110 together. The master communication control device 130A may not control the communication devices 110 bundled by the slave communication control device 130B, that is, a secondary system configured by the slave communication control device 130B. Thus, as a modification example, mounting as illustrated in Fig. 4 is also possible.

The communication control device 130 may also acquire necessary information from entities other than the communication device 110 and the terminal 120 of the communication network 100 for its role. Specifically, for example, information necessary for protection of the primary system can be acquired from a database (regulatory database) that is managed or operated by a national regulatory authority (NRA) in a country or region. An example of the regulatory database may include a universal licensing system (ULS) that is operated by the Federal Communications Commissions (FCC) of United States. Examples of the information necessary for protection of the primary system include location information of the primary system, communication parameters of the primary system, out-of-band emission (OOBE) limit, adjacent channel leakage ratio (ACLR), adjacent channel selectivity, fading margin, and protection ratio (PR). In regions where fixed numerical values, acquisition methods, derivation methods, and the like are stipulated by laws and the like in order to protect the primary system, it is desirable to use information stipulated by the laws as information necessary to protect the primary system.

A database that records communication devices 110 and terminals 120 that have received conformance certification, such as an equipment authorization system (EAS) managed by Office of Engineering and Technology (OET) of the FCC also corresponds to the regulatory database. From such a regulatory database, it is possible to acquire information on operable frequencies of the communication devices 110 and the terminals 120, information on maximum equivalent isotropic radiated power (EIRP), and the like. Of course, the communication control device 130 may use such information to protect the primary system.

In addition, it can also be assumed that the communication control device 130 acquires radio wave sensing information from a radio wave sensing system installed and operated for the purpose of radio wave detection of the primary system. As a specific example, in Citizens Broadband Radio Service (CBRS) of the United States, the communication control device 130 acquires radio wave detection information of a shipboard radar that is a primary system from a radio wave sensing system called an environmental sensing capability (ESC). Further, if the communication device 110 or the terminal 120 has a sensing function, the communication control device 130 may acquire radio wave detection information of the primary system from them.

Further, it can be assumed that the communication control device 130 acquires activity information of the primary system from a portal system that manages the activity information of the primary system. As a specific example, in Citizens Broadband Radio Service (CBRS) of the United States, the communication control device 130 acquires the activity information of the primary system from a calendar type system called Informing Incumbent Portal. A protection area called a dynamic protection area (DPA) is activated on the basis of the acquired activity information to protect the primary system. An equivalent system called Informing Incumbent Capability (IIC) also realizes protection for the primary system in a similar manner.

An interface between entities constituting this system model may be wired or wireless. For example, an interface between the communication control device 130 and the communication device 110 may use not only a wired line but also a wireless interface that does not depend on spectrum access. Examples of the wireless interface that does not depend on spectrum access include, for example, wireless communication lines provided by mobile communication carriers via licensed bands, Wi-Fi communication using existing license-exempt bands, and the like.

<1.2 Terminology Regarding Frequency and Sharing>

As described above, the present embodiment will be described assuming a dynamic spectrum access environment. As a representative example of dynamic spectrum access, a mechanism defined by CBRS in the United States (that is, the mechanism defined by Part 96 Citizens Broadband Radio Service of FCC rules in the United States) will be described.

In CBRS, each user of a frequency band is classified into one of three groups, as illustrated in Fig. 5. This group is called a tier. The three groups are called an incumbent tier, a priority access tier, and a general authorized access (GAA) tier.

The incumbent tier is a group of existing users who have been using a frequency band. Existing users are also generally referred to as primary users. In CBRS, US Department of Defense (DOD), fixed satellite operators, and Grandfathered Wireless Broadband Licensees (GWBLs) are defined as existing users. The incumbent tier is not required to avoid interference with the priority access tier and the GAA tier, which have lower priority and to curb use of a frequency band. The incumbent tier is also protected from interference by the priority access tier and the GAA tier. Thus, incumbent tier users can use the frequency band without considering the presence of other groups.

The priority access tier is a group of users who use a frequency band on the basis of the above-described priority access license (PAL). Priority access tier users are also generally referred to as secondary users. At the time of using a frequency band, the priority access tier is required to avoid interference and to curb use of the frequency band with respect to the incumbent tier which has a higher priority than the priority access tier. On the other hand, the GAA tier which has a lower priority than the priority access tier is not required to avoid interference and to curb use of the frequency band. Further, the priority access tier is not protected from interference with the incumbent tier having a higher priority, but is protected from interference with the GAA tier having a lower priority.

The GAA tier is a group of frequency band users who do not belong to the incumbent tier and the priority access tier. Similar to the priority access tier, GAA tier users are also generally referred to as secondary users. However, they are also called low-priority secondary users because they have a lower shared use priority than the priority access tier. At the time of using a frequency band, the GAA tier is required to avoid interference and to curb use of the frequency band with respect to the incumbent tier and the priority access tier which have higher priority. Further, the GAA tier is not protected from interference by the incumbent tier and the priority access tier which have higher priority.

Although the mechanism of CBRS has been described above as a representative example of dynamic spectrum access, the present embodiment is not limited to the definition of CBRS. For example, CBRS generally adopts a 3-tier structure, as illustrated in Fig. 5, but a 2-tier structure may be adopted in the present embodiment. Representative examples of the 2-tier structure include Authorized Shared Access (ASA), Licensed Shared Access (LSA), evolved LSA (eLSA), TV band White Space (TVWS), US 6 GHz band sharing, and the like. ASA, LSA, and eLSA do not have the GAA tier and adopt a structure equivalent to a combination of the incumbent tier and the priority access tier. In addition, TVWS and US 6 GHz band sharing do not have the priority access tier and adopt a structure equivalent to a combination of the incumbent tier and the GAA tier. Further, four or more tiers may be present. Specifically, four or more tiers may be generated by, for example, providing a plurality of intermediate tiers corresponding to the priority access tier and assigning different priorities to the respective intermediate tiers. In addition, for example, the GAA tier may be divided in the same manner and given priority to increase the number of tiers. In other words, each group may be divided.

Further, the primary system of the present embodiment is not limited to the definition of CBRS. As an example of the primary system, for example, a wireless system such as TV broadcasting, a fixed microwave line (fixed system (FS)), a meteorological radar, a radio altimeter, communications-based train control, or radio astronomy is assumed. Further, the primary system is not limited thereto, and any wireless system can be the primary system of the present embodiment.

In addition, as described above, the present embodiment is not limited to a spectrum access environment. Generally, an existing system that uses a target frequency band is called a primary system and a secondary user is called a secondary system in spectrum access or frequency secondary use, but they should be read in place of other terms when the present embodiment is applied to environments other than the spectrum access environment. For example, a macro cell base station in a heterogeneous network (HetNet) may be a primary system, and a small cell base station or a relay station may be a secondary system. Further, a base station may be a primary system, and relay user equipment (UE) and vehicle UE that are present within the coverage of the base station and realize D2D and V2X may be secondary systems. The base station is not limited to a fixed type, and may be portable or mobile. In such a case, for example, the communication control device 130 of the present embodiment may be included in a core network, a base station, a relay station, relay UE, and the like.

Further, when the present embodiment is applied to environments other than the spectrum access environment, the term "frequency" in the present disclosure is replaced by another term shared by an application destination. For example, it is assumed that the term is replaced by terms such as "resource", "resource block", "resource element", "resource pool", "channel", "component carrier", "carrier", "subcarrier", "bandwidth part (BWP)", "frequency range", and other terms having an equivalent or similar meaning.

«1. Description of Various Procedures Assumed in Present Embodiment»

Here, basic procedures that can be used at the time of implementing the present embodiment will be described. Description up to <2.5> which will be described later will be made on the assumption that the procedures are mainly performed in the communication device 110A.

<2.1 Registration Procedure>

A registration procedure is a procedure for registering information on a wireless system that intends to use a frequency band. More specifically, it is a procedure for registering device parameters regarding the communication device 110 of the wireless system in the communication control device 130. Typically, the registration procedure is started by the communication device 110, which represents the wireless system that intends to use the frequency band, notifying the communication control device 130 of a registration request including device parameters. If a plurality of communication devices 110 belong to the wireless system that intends to use the frequency band, device parameters of each of the plurality of communication devices are included in the registration request. Further, a device that transmits the registration request on behalf of the wireless system may be determined appropriately.

<2.1.1 Details of Required Parameters>

Device parameters refer to, for example, the following information.

- Information on a user of the communication device 110 (hereinafter referred to as user information)
- Unique information of the communication device 110 (hereinafter referred to as unique information)
- Information on the location of the communication device 110 (hereinafter referred to as location information)
- Information on an antenna of the communication device 110 (hereinafter referred to as antenna information)
- Information on the wireless interface of the communication device 110 (hereinafter referred to as wireless interface information)
- Legal information on the communication device 110 (hereinafter referred to as legal information)
- Information on an installer of the communication device 110 (hereinafter referred to as installer information)
- Information on a group to which the communication device 110 belongs (hereinafter, group information)

The device parameters are not limited to the above. Information other than these may be handled as device parameters. The device parameters do not need to be transmitted once and may be divided and transmitted a plurality of times. In other words, a plurality of registration requests may be transmitted for one registration procedure. In this manner, one procedure or one type of processing within the procedure may be divided and performed a plurality of times. The same applies to procedures which will be described later.

The user information is information regarding the user of the communication device 110. For example, a user ID, an account name, a user name, user contact information, a call sign, and the like can be assumed. The user ID and the account name may be uniquely generated by the user of the communication device 110 or may be issued in advance by the communication control device 130. It is desirable to use the call sign issued by the NRA.

The user information can be used, for example, for interference resolution. As a specific example, there may be a case where the communication control device 130 determines suspension of using a frequency being used by the communication device 110 and gives an instruction based on determination of suspension of use in a spectrum use notification procedure which will be described in <2.5> below, but a spectrum use notification request for the frequency continues to be received. In such a case, the communication control device 130 can suspect a problem in the communication device 110 and contact the user contact information included in the user information for request for checking the behavior of the communication device 110. The present disclosure is not limited to this example, and if it is determined that the communication device 110 is performing an operation contrary to communication control performed by the communication control device 130, the communication control device 130 can contact using the user information.

The unique information is information that can identify the communication device 110, product information of the communication device 110, information regarding hardware or software of the communication device 110, and the like.

The information that can identify the communication device 110 can include, for example, a manufacture number (serial number) of the communication device 110, the ID of the communication device 110, and the like. The ID of the communication device 110 may be uniquely given by the user of the communication device 110, for example.

The product information of the communication device 110 can include, for example, a certification ID, a product model number, information on the manufacturer, and the like. The certification ID is an ID granted by a certification authority in each country or region, such as an FCC ID in the United States, CE number in Europe, and the certification of conformity with technical regulations in Japan (technical conformity). An ID issued by an industry association on the basis of its own certification program may also be regarded as the certification ID.

The unique information represented by such information can be used, for example, for an allowlist or a denylist. For example, if any information regarding the communication device 110 in operation is included in the denylist, the communication control device 130 can give an instruction to suspend the spectrum use for the communication device 110 in the spectrum use notification procedure described in <2.5> below. Furthermore, the communication control device 130 can perform an operation such that suspension of use is not canceled until the communication device 110 is removed from the denylist. Further, for example, the communication control device 130 can reject registration of a communication device 110 included in the denylist. Further, for example, the communication control device 130 can also perform an operation of not considering a communication device 110 corresponding to information included in the denylist in interference calculation of the present disclosure or considering only a communication device 110 corresponding to information included in the allowlist in interference calculation.

In the present disclosure, the FCC ID may be handled as information regarding a transmission power. For example, in an equipment authorization system (EAS) database, which is a type of regulatory database, it is possible to obtain information on a device that has already been certified, and an application programming interface (API) thereof is also open to the public. For example, certified maximum EIRP information and the like can be included in the corresponding information together with an FCC ID. Since such power information is associated with an FCC ID, the FCC ID can be handled as transmission power information. Similarly, the FCC ID may be handled as equivalent to any other information included in the EAS. Further, if there is information associated with a certification ID, not limited to the FCC ID, the certification ID may be handled as equivalent to that information.

The information on the hardware of the communication device 110 can include, for example, transmission power class information. For example, U.S. Title 47 C.F.R (Code of Federal Regulations) Part 96 defines two types of classes, Category A and Category B, for the transmission power class information, and information on hardware of a communication device 110 that complies with the regulations can include information on which of the two classes includes it. Further, in TS36.104 and TS38.104 of 3rd Generation Partnership Project (3GPP), several classes of eNodeB and gNodeB are defined, and these regulations can also be used.

The transmission power class information can be used, for example, for interference calculation. Interference calculation can be performed using a maximum transmission power defined for each class as the transmission power of the communication device 110.

The information on the software of the communication device 110 can include, for example, version information, a build number, and the like regarding an execution program that describes processing required for interaction with the communication control device 130. In addition, version information, a build number, and the like of software for operating as the communication device 110 may also be included.

The location information is typically information that can identify the location of the communication device 110. For example, it is coordinate information obtained by a positioning function represented by a global positioning system (GPS), Beidou, a quasi-zenith satellite system (QZSS), Galileo, or an assisted global positioning system (A-GPS). Typically, information on a latitude, a longitude, ground height/above sea level, an altitude, and positioning error may be included. Alternatively, for example, it may be location information registered in an information management device managed by the National Regulatory Authority (NRA) or its entrusted agency. Alternatively, for example, it may be coordinates of X-, Y-, and Z-axes with a specific geographical position as the origin. Further, in addition to such coordinate information, an identifier indicating whether the communication device 110 is present outdoors or indoors can be given.

The location information may also include location uncertainty. For example, as the location uncertainty, both or either of horizontal and vertical planes can be provided. The location uncertainty can be used as a correction value, for example, at the time of calculating a distance to an arbitrary point. Further, for example, the location uncertainty can also be used as area information where the communication device 110 is likely to be located. In this case, it is used for processing such as identifying frequency information that can be used within the area indicated by the location uncertainty.

Further, the location information may be information indicating the area where the communication device 110 is located. For example, information indicating an area determined by the government, such as a postal code and an address may be used. Further, for example, an area may be indicated by a set of three or more geographic coordinates. The information indicating such an area may be provided along with coordinate information.

In addition, when the communication device 110 is located indoors, the location information may also include information indicating the floor of the building where the communication device 110 is located. For example, the location information can include identifiers indicating the number of floors, ground, and underground. Further, the location information can include information indicating more closed indoor spaces, such as room numbers and room names in the building.

Typically, it is desirable that the positioning function be provided in the communication device 110. However, there may be cases where the performance of the positioning function does not meet a required accuracy. Further, even if the performance of the positioning function satisfies the required accuracy, it may not always be possible to acquire location information that satisfies the required accuracy depending on the installation location of the communication device 110. Therefore, the positioning function may be provided in a device other than the communication device 110, and the communication device 110 may acquire information regarding the location from the device. The device having the positioning function may be an available existing device, or it may be provided by the installer of the communication device 110. In such a case, it is desirable that location information measured by the installer of the communication device 110 be written to the communication device 110.

The antenna information is typically information indicating the performance, configuration, and the like of antennas provided in the communication device 110. Typically, information such as an antenna installation height, a tilt angle (Downtilt), a horizontal azimuth, boresight, an antenna peak gain, and an antenna model may be included.

The antenna information can also include information regarding beams that can be formed. For example, information such as a beam width, a beam pattern, and analog or digital beamforming capability can be included.

Further, the antenna information can also include information on the performance and configuration of MIMO (Multiple Input Multiple Output) communication. For example, information such as the number of antenna elements and the maximum number of spatial streams (or the number of MIMO layers) can be included. In addition, codebook information to be used, weight matrix information, and the like can also be included. The weight matrix information includes a unitary matrix, a zero-forcing (ZF) matrix, a minimum mean square error (MMSE) matrix, and the like. These are obtained by singular value decomposition (SVD), eigen value decomposition (EVD), block diagonalization (BD), and the like. Further, if the communication device 110 has a function such as maximum likelihood detection (MLD) that requires nonlinear computation, the antenna information may include information indicating the function.

Further, the antenna information may include ZoD (Zenith of Direction, Departure). ZoD is a type of radio wave arrival angle. The ZoD may not be notified from the communication device 110, but may be estimated from radio waves radiated from the antenna of the communication device 110 by the other communication device 110 and notified. In this case, the communication device 110 may be a device operating as a base station or an access point, a device performing D2D communication, a moving relay base station, or the like. The ZoD can be estimated by radio wave arrival direction estimation technology such as multiple signal classification (MUSIC) or estimation of signal propagation via rotation invariance techniques (ESPRIT). Further, the ZoD can also be used by the communication control device 130 as measurement information.

The wireless interface information is typically information indicating a wireless interface technology included in the communication device 110. For example, identifier information indicating a technology used in GSM, CDMA2000, UMTS, E-UTRA, E-UTRA NB-IoT, 5G NR, 5G NR NB-IoT or a further next generation cellular system may be included as the wireless interface information. Further, identifier information indicating long term evolution (LTE)/5G-compliant derivative technology such as MulteFire, long term evolution-unlicensed (LTE-U), and NR-Unlicensed (NR-U) may also be included. Further, identifier information indicating a standard technology such as a metropolitan area network (MAN) such as WiMAX and WiMAX2+, and an IEEE 802.11 wireless LAN may also be included. Identifier information indicating extended global platform (XGP) or shared XGP (sXGP) may also be included. Identifier information of a communication technology for LPWA (Local Power, Wide Area) may also be included. Further, identifier information indicating a proprietary wireless technology can also be included. Further, version numbers or release numbers of technical specifications defining these technologies can be included as radio interface information.

In addition, the wireless interface information may also include frequency band information supported by the communication device 110. For example, the frequency band information can be represented by an upper limit frequency, a lower limit frequency, a center frequency, a bandwidth, a 3GPP operating band number, a combination of at least two thereof, or the like. Further, one or more pieces of frequency band information may be included in the wireless interface information.

The frequency band information supported by the communication device 110 can further include information indicating capabilities of band extension techniques such as carrier aggregation (CA) and channel bonding. For example, band information that can be combined may be included. In addition, regarding carrier aggregation, information regarding a band desired to be used as a primary component carrier (PCC) or a secondary component carrier (SCC) may also be included. In addition, the number of component carriers (CC number) that can be simultaneously aggregated can also be included.

The frequency band information supported by the communication device 110 may further include information indicating a combination of frequency bands supported by dual connectivity and multi-connectivity. In addition, information on other communication devices 110 that cooperatively provide dual connectivity and multi-connectivity may also be provided. In subsequent procedures, the communication control device 130 may determine communication control disclosed in the present embodiment in consideration of other communication devices 110 that are in a cooperative relationship, and the like.

The frequency band information supported by the communication device 110 may also include information indicating radio wave use priority such as PAL and GAA.

In addition, the wireless interface information can also include modulation scheme information supported by the communication device 110. For example, as a representative example, information indicating primary modulation schemes such as frequency shift keying (FSK), n-value phase shift keying (PSK) (where n is a multiplier of 2, such as 2, 4, or 8), n-value quadrature amplitude modulation (QAM) (where n is a multiplier of 4, such as 4, 16, 64, 256, or 1024). It can also include information indicating secondary modulation schemes such as orthogonal frequency division multiplexing (OFDM), scalable OFDM, DFT spread OFDM (DFT-s-OFDM), generalized frequency division multiplexing (GFDM), and filter bank multi-carrier (FBMC).

In addition, the wireless interface information can also include information on error correction code. For example, it can include capabilities such as turbo code, low density parity check (LDPC) code, polar code, and erasure correction code, and coding rate information to be applied.

The modulation scheme information or the information on the error correction code can also be represented by modulation and coding scheme (MCS) indexes as another aspect.

The wireless interface information can also include information indicating a function specific to each wireless technical specification supported by the communication device 110. For example, as a representative example, transmission mode (TM) information defined in LTE is conceivable. In addition, those having two or more modes for a specific function can be included in the wireless interface information like TM information. Further, in technical specifications, if the communication device 110 supports a function that is not essential to the specifications even if two or more modes are not specified, information indicating the supported function can also be included.

In addition, the wireless interface information can also include radio access technology (RAT) information supported by the communication device 110. For example, information indicating time division multiple access (TDMA), frequency division multiple access (FDMA), orthogonal frequency division multiple access (OFDMA), power division multiple access (PDMA), code division multiple access

(CDMA), sparse code multiple access (SCMA), interleave division multiple access (IDMA), spatial division multiple access (SDMA), carrier sense multiple access/collision avoidance (CSMA/CA), carrier sense multiple access/-collision detection (CSMA/CD), and the like can be included. TDMA, FDMA, and OFDMA are classified as orthogonal multiple access (OMA). PDMA, CDMA, SCMA, IDMA, and SDMA are classified as non-orthogonal multiple access (NOMA). A representative example of PDMA is a technique realized by combining superposition coding (SPC) and successive Interference canceller (SIC). CSMA/CA and CSMA/CD are classified as opportunistic access.

If the wireless interface information includes information indicating an opportunistic access scheme, it may further include information indicating details of the access scheme. As a specific example, information indicating whether it is frame based equipment (FBE) or load based equipment (LBE) defined in EN 301 598 of ETSI may be included.

When the wireless interface information indicates LBE, it may further include LBE-specific information such as a priority class.

Further, the wireless interface information can include information on duplex modes supported by the communication device 110. As a representative example, information regarding schemes such as frequency division duplex (FDD), time division duplex (TDD), and full duplex (FD) can be included.

When TDD is included as wireless interface information, TDD frame structure information used or supported by the communication device 110 can be added. Further, information regarding duplex modes may be included for each frequency band indicated by frequency band information.

When FD is included as wireless interface information, information on an interference power detection level may be included.

Further, the wireless interface information can also include information on a transmit diversity technique supported by the communication device 110. For example, space time coding (STC) may be included.

The wireless interface information may also include guard band information. For example, information on a guard band size determined for the wireless interface in advance may be included. Alternatively, for example, information on a guard band size desired by the communication device 110 may be included.

Regardless of the above aspect, the wireless interface information may be provided for each frequency band.

The legal information typically information on regulations with which the communication device 110 must comply, which is defined by a radio wave administrative agency of each country or region, or equivalent organizations, certification information acquired by the communication device 110, and the like. The information on regulations can typically include, for example, upper limit information on out-of-band radiation, information on blocking properties of receivers, and the like. The certification information can typically include, for example, type approval information, regulatory information that serves as a standard for obtaining certification, and the like. Examples of the type approval information include U.S. FCC IDs, Japanese technical standards conformity certification, and the like. Examples of the regulatory information include U.S. FCC regulation numbers, European ETSI Harmonized Standard numbers, and the like.

Among the legal information, information relating to numerical values may be replaced by information specified in radio interface technology specifications. The wireless interface technology specifications correspond to 3GPP TS 36.104 and TS 38.104, and the like, for example. An adjacent channel leakage ratio (ACLR) is specified for these. Instead of the upper limit information on out-of-band radiation, the ACLR specified in the specifications may be used to derive and use an upper limit value of out-of-band radiation. Further, ACLR itself may be used as necessary. Adjacent channel selectivity (ACS) may also be used instead of blocking properties. Further, these may be used together, or an adjacent channel interference ratio (ACIR) may be used. In general, the ACIR has the following relationship with the ACLR and ACS.

[Math. 1]

$$\mathrm{ACIR} = \left(\frac{1}{ACS} + \frac{1}{ACLR}\right)^{-1} \quad (1)$$

Although Equation (1) uses a true value expression, it may be represented by a logarithmic expression.

The installer information can include information that can identify the person (installer) who installed the communication device 110, unique information associated with the installer, and the like. Typically, installer information can include information on an individual who is responsible for the location information of the communication device 110, which is called a certified professional installer (CPI) defined in NPL 2. CPI discloses a certified professional installer registration ID (CPIR-ID) and a CPI name. In addition, as unique information associated with to CPI, for example, contact address (a mailing address or contact address), an e-mail address, a telephone number, a public key identifier (PKI), and the like are disclosed. The installer information is not limited thereto and other information on the installer may be included in the installer information as needed.

The group information can include information on a communication device group to which the communication device 110 belongs. Specifically, for example, information regarding groups of the same or equivalent types as those disclosed in WINNF-SSC-0010 may be included. Further, if a communication carrier manages the communication devices 110 in units of groups according to its own operation policy, for example, information regarding the group can be included in the group information.

The information listed so far may be inferred by the communication control device 130 from other information provided by the communication device 110 instead of being provided from the communication device 110 to the communication control device 130. Specifically, for example, the guard band information can be inferred from radio interface information. If the wireless interface used by the communication device 110 is E-UTRA or 5G NR, it can be inferred on the basis of E-UTRA transmission bandwidth specifications described in 3GPP TS36.104, 5G NR transmission bandwidth specifications described in 3GPP TS38.104, and tables described in TS38.104 described below.

[Table 1]

| Table 5.6-1 Transmission bandwidth configuration NR8 in E-UTRA channel bandwidths (Quoted from Table 5.6-1 in 3GPP TS 36.104) | | | | | | |
|---|---|---|---|---|---|---|
| Channel bandwidth BW$_{channel}$ [MHz] | 1. 4 | 3 | 5 | 10 | 1 15 | 20 |
| Transmission bandwidth configuration $N_{RB}$ | 6 | 15 | 25 | 50 | 75 | 100 |

[Table 2]

| SCS (kHz) | 5 MHz | 10 MHz | 15 MHz | 20 MHz | 25 MHz | 30 MHz | 40 MHz | 50 MHz | 60 MHz | 70 MHz | 80 MHz | 90 MHz | 100 MHz |
|---|---|---|---|---|---|---|---|---|---|---|---|---|---|
| Table 5. 3. 3-1: Minimum guardband (kHz) (FR1) (Quoted from Table 5.3.3-1 in 3GPP TS 38.104) | | | | | | | | | | | | | |
| 15 | 242.5 | 312.5 | 382.5 | 452.5 | 522.5 | 592.5 | 552.5 | 692.5 | N.A | N.A | N.A | N.A | N.A |
| 30 | 505 | 665 | 645 | 805 | 785 | 945 | 905 | 1045 | 825 | 965 | 925 | 885 | 845 |
| 60 | N.A | 1010 | 990 | 1330 | 1310 | 1290 | 1610 | 1570 | 1530 | 1490 | 1450 | 1410 | 1370 |

[Table 3]

| Table: 5. 3. 3-2: Minimum guardband (kHz) (FR2) (Quoted from Table: 5.3.3-2 in 3GPP TS 38.104) | | | | |
|---|---|---|---|---|
| SCS (kHz) | 50 MHz | 100 MHz | 200 MHz | 400 MHz |
| 60 | 1210 | 2450 | 4930 | N.A |
| 120 | 1900 | 2420 | 4900 | 9860 |

[Table 4]

| Table: 5. 3. 3-3: Minimum guardband (kHz) of SCS 240 kHz SS/PBCH block (FR2) (Quoted from Table: 5.3.3-3 in 3GPP TS 38.104) | | | |
|---|---|---|---|
| SCS (kHz) | 100 MHz | 200 MHz | 400 MHz |
| 240 | 3800 | 7720 | 15560 |

In other words, the communication control device 130 may acquire the information listed so far, and the communication device 110 does not necessarily need to provide the information to the communication control device 130. Further, an intermediate device 130B (e.g., network manager) that bundles a plurality of communication devices 110 does not need to provide the information to the communication control device 130A. The communication device 110 or the intermediate device 130B providing information to the communication control device 130 or 130A is merely one means of providing the information in the present embodiment. The information listed so far means that the communication control device 130 means information that can be necessary for normal completion of the present procedure, and means of providing the information does not matter. For example, such an approach is called multi-step registration and allowed in WINNF-TS-0061.

13

In addition, it goes without saying that the information listed so far can be selectively applied according to a legal system and technical specifications of a region.

<2.1.1.1 Supplement to Required Parameters>

In the registration procedure, it is assumed that device parameters regarding not only the communication device 110 but also the terminal 120 are required to be registered in the communication control device 130. In such a case, the term "communication device" in the description in <2.1.1> may be replaced with the term "terminal" or a similar term. Further, parameters specific to "terminal" which are not mentioned in <2.1.1> may be handled as required parameters in the registration procedure. For example, a user equipment (UE) category defined by 3GPP, and the like are conceivable.

<2.1.2 Details of Registration Processing>

As described above, the communication device 110 representing the wireless system attempting to use the frequency band generates a registration request including the device parameters and notifies the communication control device 130 of the registration request.
Here, if the device parameters include the installer information, the communication device 110 may perform falsification prevention processing on the registration request using the installer information. Further, encryption processing may be performed on some of all information included in the registration request. Specifically, for example, a unique public key may be shared in advance between the communication device 110 and the communication control device 130, and the communication device 110 may encrypt information using a private key corresponding to the public key. An example of an encryption target may include information sensitive to crime prevention, such as the location information.
The ID and the location information of the communication device 110 are open to the public, and the communication control device 130 may hold an ID and location information of a main communication device 110 present within its own coverage in advance. In such a case, since the communication control device 130 can obtain location information from the ID of a communication device 110 that has transmitted a registration request, the location information need not be included in the registration request. Further, it is also conceivable that the communication control device 130 returns necessary device parameters to the communication device 110 that has transmitted the registration request, and in response, the communication device 110 transmits a registration request including device parameters necessary for registration. Thus, the information included in the registration request may vary from case to case.
After receiving the registration request, the communication control device 130 performs registration processing of the communication device 110 and returns a registration response according to a processing result. If there is no shortage of information necessary for registration and no abnormality, the communication control device 130 records the information in an internal or external storage device and notifies of normal completion. Otherwise, it notifies of registration failure. When registration is normally completed, the communication control device 130 may assign an ID to each communication device 110 and notify of the ID information at the time of response. In case of registration failure, the communication device 110 may notify of a modified registration request again. Further, the communication device 110 may change the registration request and attempt the registration procedure until normal completion.
The registration procedure may be executed even after the registration has normally been completed. Specifically, the registration procedure may be reexecuted when the location information changes beyond a predetermined reference, for example, due to movement, accuracy improvement, or the like. The predetermined reference is typically set by a legal system of each country or region. For example, in 47 C.F.R Part 15 of United States, Mode II personal/portable white space devices, that is, devices that use vacant frequencies should be re-registered when locations thereof change by 100 meters or more.

<2.2 Available Spectrum Query Procedure>

An available spectrum query procedure is a procedure in which a wireless system that intends to use a frequency band inquires of the communication control device 130 for information on available frequencies. It is not always necessary to perform the available spectrum query procedure. Further, a communication device 110 that makes a query on behalf of the wireless system that intends to use a frequency band may be the same as or different from a communication device 110 that has generated a registration request. Typically, the procedure is started by the communication device 110, which makes a query, notifying the communication control device 130 of a query request including information that can identify the communication device 110.
Here, the available spectrum information is typically information indicating a frequency that the communication device 110 can safely use for secondary use without fatal interference with the primary system.
The available spectrum information is determined, for example, on the basis of a secondary use prohibited area called an exclusion zone. Specifically, for example, if the communication device 110 is installed in the secondary use prohibited area provided for the purpose of protecting the primary system that uses a frequency channel F1, the frequency channel F 1 is not notified as an available channel to the communication device 110.

The available spectrum information can also be determined, for example, by a degree of interference with the primary system. Specifically, for example, even in an area other than the secondary use prohibited area, when a decision is made that the communication device gives the fatal interference with the primary system, the frequency channel may not be notified as an available channel. An example of a specific calculation method is described in <2.2.2> to be described below.

Further, as described above, there may be frequency channels that are not notified as being available according to conditions other than primary system protection requirements. Specifically, for example, in order to avoid interference that may occur between communication devices 110 in advance, a frequency channel being used by another communication device 110 present in the vicinity of the corresponding communication device 110 may not be notified as an available channel. Thus, the available spectrum information configured in consideration of interference with other communication devices 110 may be configured as, for example, a "recommended spectrum" and provided along with the available spectrum information. Accordingly, it is desirable that the "recommended spectrum" be a subset of the available frequency information.

Even if the primary system is affected, the same frequency as that of the primary system or a neighboring communication device 110 may be notified as an available channel if the influence can be avoided by reducing a transmission power. In such a case, maximum acceptable transmission power information is typically included in the available frequency information. The maximum acceptable transmission power is typically represented as EIRP. It is not always necessary to be limited to this, and it may be provided as a combination of conducted power and an antenna gain, for example. Furthermore, for the antenna gain, an acceptable peak gain may be set for each spatial direction.

<2.2.1 Details of Required Parameters>

Information that can identify a wireless system that intends to use a frequency band can be assumed to be, for example, unique information registered at the time of the registration procedure, the above-mentioned ID information, and the like.

In addition, the query request can also include query requirement information. The query requirement information may include, for example, information indicating a frequency band of which the availability is desired to be known. Further, for example, the transmission power information may be included. A communication device 110 that makes a query can have transmission power information, for example, if it wants to know only frequency information that is likely to use a desired transmission power. The query requirement information does not necessarily have to be included in the query request.

Information indicating a format of the available spectrum information may also be included in the information indicating the frequency band. The IEEE 802.11 standard defines a channel number for each band. For example, a flag requesting whether or not a channel defined by such a wireless interface technical specification is used may be included. As another format, a flag requesting whether a unit frequency range rather than the defined channel is used may be included. When the unit frequency is 1 MHz, available spectrum information is requested for each frequency range of 1 MHz. When this flag is used, desired unit frequency information may be enclosed in the flag.

Further, the query request can also include a measurement report. The measurement report includes results of measurements performed by the communication device 110 and/or the terminal 120. Some or all of the measurement results may be represented by raw data or processed data. For example, standardized metrics represented by reference signal received power (RSRP), a reference signal strength indicator (RSSI), and reference signal received quality (RSRQ) can be used for measurement.

<2.2.2 Details of Available Spectrum Evaluation Processing>

After the query request is received, the available spectrum is evaluated on the basis of the query requirement information. For example, Error! Reference source not found. As described above, it is possible to evaluate the available spectrum in consideration of the primary system, the secondary use prohibited area thereof, and the presence of neighboring communication devices 110.

The communication control device may derive the secondary use prohibited area. For example, when a maximum transmission power $P_{MaxTx(dBm)}$ and a minimum transmission power $P_{MinTx(dBm)}$ are defined, it is possible to determine the secondary use prohibited area by calculating a range of a separation distance between the primary system and the secondary system using the following equation.

[Math. 2]

$$PL^{-1}\left(P_{MaxTx\text{(dBm)}} - I_{Th\text{(dBm)}}\right)_{(dB)} \leq d < PL^{-1}\left(P_{MinTx\text{(dBm)}} - I_{Th\text{(dBm)}}\right)_{(dB)}$$

$I_{Th\text{(dBm)}}$ is an acceptable interference power (a limit value of acceptable interference power), d is a distance between a predetermined reference point and a communication device 110, and $PL()_{(dB)}$ is a function of propagation loss. This makes it possible to determine the spectrum availability according to the location relationship between the primary system and the communication device 110. In addition, when the transmission power information or power range information that the communication device 110 wants to use is provided by a request, the spectrum availability can be determined by calculating $PL^{-1}(P_{Tx\text{(dBm)}} - I_{Th\text{(dBm)}})$ and comparing it with the above equation for the range.

Maximum acceptable transmission power information may be derived. Typically, the maximum acceptable transmission power information is calculated using acceptable interference power information in the primary system or a protection zone thereof, location information of a reference point for calculating an interference power level suffered by the primary system, registration information of the communication device 110, and a propagation loss estimation model. Specifically, as an example, it is calculated by the following equation.

[Math. 3]

$$P_{MaxTx\text{(dBm)}} = I_{Th\text{(dBm)}} + PL(d)_{(dB)} \qquad (2)$$

In Equation (2), an antenna gain in a transceiver is not included, but the antenna gain in the transceiver may be included according to a method of expressing the maximum acceptable transmission power (EIRP, conducted power, and the like) and a reference point of received power (antenna input point, antenna output point, or the like). A safety margin for compensating for variations due to fading or the like may also be included. Further, a feeder loss may also be considered as necessary. In addition, it is possible to perform similar calculations for neighboring channels by additionally taking into account an adjacent channel leakage ratio (ACRL) and a maximum value of out-of-band radiation.

Further, Equation (2) is written on the basis of the assumption that a single communication device 110 is an interference source (single-station interference). For example, if aggregated interference from a plurality of communication devices 110 must be considered at the same time, a correction value may be added. Specifically, for example, a correction value can be determined on the basis of three types (Fixed/Predetermined, Flexible, and Flexible Minimized) of interference margin allocation schemes disclosed in NPL 3 (ECC Report 186).

It is not always possible to directly use the acceptable interference power information itself, as in Equation (2). For example, if a required signal power to interference power ratio (SIR), a signal to interference plus noise ratio (SINR), or the like of the primary system are available, these may be converted into acceptable interference power and used. Such conversion processing is not limited to this processing, and may also be applied to processing of other procedures.

Although Equation (2) is expressed using logarithms, it may be converted to antilogarithms for practical use. In addition, all logarithmic parameters described in the present disclosure may be appropriately converted to antilogarithms and used.

Further, if the above-described transmission power information is included in query requirement information, it is possible to evaluate the available spectrum by a method other than the above-described method. Specifically, for example, when it is assumed that a desired transmission power indicated by transmission power information is used, if an estimated amount of interference is less than the acceptable interference power in the primary system or the protection zone thereof, it is determined that the corresponding frequency channel is available and the communication device 110 is notified of this.

Further, for example, if an area or a space in which the communication device 110 can use a frequency band, like the area of a radio environment map (REM), is predetermined, the available spectrum information may be simply derived on the basis of only coordinates (X-axis, Y-axis, and Z-axis coordinates or latitude, longitude, ground height of the communication device 110) included in the location information of the communication device 110. Further, for example, if a lookup table in which the coordinates of the location of the communication device 110 are associated with available spectrum information is prepared, the available spectrum information may also be derived on the basis of only the location information of the communication device 110. Thus, there are various methods of determining the available spectrum, and the methods are not limited to the examples of the present disclosure.

Further, when the communication control device 130 acquires the information on the capability of the band extension technology such as carrier aggregation (CA) or channel bonding as the frequency band information supported by the communication device 110, the communication control device 130 may include an available combination of these, recommended combinations, or the like in the available spectrum information.

Further, when the communication control device 130 acquires information on a combination of frequency bands supported by dual connectivity and multi connectivity as the frequency band information supported by the communication device 110, the communication control device 130 may include, in the available spectrum information, information such as available frequencies and recommended frequencies for the dual connectivity and multi connectivity.

Further, in a case in which available spectrum information for the band extension technology as described above is provided, when an imbalance in the maximum acceptable transmission power is generated among a plurality of frequency channels, the maximum acceptable transmission power of each frequency channel may be adjusted and then the available spectrum information may be provided. For example, from the viewpoint of primary system protection, the maximum acceptable transmission power of each frequency channel may be aligned with the maximum acceptable transmission power of a frequency channel with a low maximum acceptable power spectral density (PSD).

The evaluation of the available spectrum does not necessarily have to be performed after the query request is received. For example, the communication control device 130 may proactively perform the evaluation without a query request after normal completion of the registration procedure described above. In such a case, the REM or lookup table presented as an example above, or an information table similar thereto may be created.

In addition, radio wave use priority such as PAL and GAA may also be evaluated. For example, if registered device parameters or query requirements include information on the priority of radio wave use, it may be possible to determine whether or not spectrum use is possible on the basis of the priority and notify of it. Further, as disclosed in NPL 2, for example, if information (referred to as a cluster list in NPL 2) on the communication device 110 that performs high-priority use (e.g., PAL) has been registered by a user in advance in the communication control device 130, evaluation may be performed on the basis of this information.

After the evaluation of the available spectrum is completed, the communication control device 130 notifies the communication device 110 of the evaluation result.

The communication device 110 may select desired communication parameters using the evaluation result received from the communication control device 130. If a spectrum grant procedure, which will be described later, is not adopted, the communication device 110 may start radio wave transmission using the selected desired communication parameters as communication parameters.

<2.3 Spectrum Grant Procedure>

The spectrum grant procedure is a procedure in which the wireless system attempting to use the frequency band receives a secondary spectrum grant from the communication control device 130. The communication device 110 that performs the spectrum grant procedure on behalf of the wireless system may be the same as or different from the communication device 110 that has performed the procedures so far. Typically, the procedure is started by the communication device 110 notifying the communication control device 130 of a spectrum grant request including information that can identify the communication device 110. As described above, the available spectrum query procedure is not essential. Therefore, the spectrum grant procedure may be performed after the available spectrum query procedure, or may be performed after the registration procedure.

In the present embodiment, it is assumed that at least the following two types of spectrum grant request schemes can be used.

- Designation scheme
- Flexible scheme

The designation scheme is a request scheme in which the communication device 110 designates the desired communication parameter and asks the communication control device 130 to permit an operation based on the desired communication parameter. The desired communication parameters include, but are not limited to, a frequency channel to be used, maximum transmission power, and the like. For example, wireless interface technology-specific parameters (modulation scheme, duplex mode, or the like) may be designated. In addition, information indicating radio wave use priority such as PAL and GAA may be included.

The flexible scheme is a request scheme in which the communication device 110 designates only requirements regarding the communication parameters and requests the communication control device 130 to designate communication parameters of which secondary use can be permitted, while satisfying the requirements. The requirements regarding the communication parameters include, but are not limited to, for example, bandwidth, desired maximum transmission power, or desired minimum transmission power. For example, wireless interface technology-specific parameters (modulation scheme, duplex mode, or the like) may be designated. Specifically, for example, one or more of TDD frame structures may be selected in advance and notified.

The spectrum grant request may also include a measurement report regardless of whether the scheme is any one of the designation scheme and the flexible scheme, like the query request. The measurement report includes results of measurement performed by the communication device 110 and/or the terminal 120. The measurement may be represented by raw data or may be represented by processed data. For example, standardized metrics typified by reference signal received power (RSRP), reference signal strength indicator (RSSI), and reference signal received quality (RSRQ) can be used for measurement.

The scheme information used by the communication device 110 may be registered in the communication control device 130 in the registration procedure described in <2.1>.

<2.3.1 Details of Spectrum Grant Processing>

After the communication control device 130 receives the spectrum grant request, the communication control device 130 performs spectrum grant processing on the basis of a spectrum grant request scheme. For example, with the technique described in <2.2>, it is possible to perform spectrum grant processing in consideration of the primary system, the secondary use prohibited area, the presence of nearby communication devices 110, and the like.

When the flexible scheme is used, the maximum acceptable transmission power information may be derived using the technique described in <2.2.2>. Typically, the maximum acceptable transmission power information is calculated using the acceptable interference power information in the primary system or its protection zone, the location information of the reference point for calculating the interference power level suffered by the primary system, the registration information of the communication device 110, and the propagation loss estimation model. Specifically, as an example, the maximum acceptable transmission power information is calculated by Equation (2) above.

Further, as described above, Equation (2) is written on the basis of the assumption that a single communication device 110 is an interference source. For example, if aggregated interference from a plurality of communication devices 110 must be considered at the same time, a correction value may be added. Specifically, for example, the correction value can be determined on the basis of three types (Fixed/Predetermined, Flexible, and Flexible Minimized) of schemes disclosed in NPL 3 (ECC Report 186).

The communication control device 130 can use various propagation loss estimation models in the spectrum grant procedure, available spectrum evaluation processing for an available spectrum query request, and the like. If a model is designated for each application, it is desirable to use the designated model. For example, in NPL 2 (WINNF-TS-0112), a propagation loss model such as extended Hata (eHATA) or an irregular terrain model (ITM) is adopted for each application. Of course, propagation loss models are not limited thereto.

There is also the propagation loss estimation model that requires information on a radio wave propagation path. Information indicating inside and outside a line of sight (LOS: Line of Sight and/or NLOS: Non Line of Sight), topographical information (undulation, sea level, or the like), or environmental information (urban, suburban, rural, open sky, or the like), for example, can be included in the information on the radio wave propagation path. In using the propagation loss estimation model, the communication control device 130 may infer information thereof from the registration information of the communication device 110 or information of the primary system that has already been acquired. Alternatively, if there are parameters designated in advance, it is desirable to use these parameters.

If a propagation loss estimation model is not designated for a predetermined application, it may be properly used as necessary. For example, a model in which a loss is calculated to be small, such as a free space loss model, is used to estimate interference power to another communication device 110, while a model in which a loss is calculated to be large is used to estimate coverage of the communication device 110.

Further, if a designated propagation loss estimation model is used, as an example, it is possible to perform spectrum grant processing according to evaluation of an interference risk. Specifically, for example, when it is assumed that a desired transmission power indicated by transmission power information is used, if an estimated amount of interference is less than the acceptable interference power in the primary system or the protection zone thereof, it is determined that the corresponding frequency channel is permitted to be used, which is notified to the communication device 110.

In both the designated scheme and the flexible scheme, radio wave use priority such as PAL and GAA may be evaluated, like the query request. For example, if registered device parameters or query requirements include information on radio wave use priority, it may be determined whether spectral use is possible on the basis of the priority and notified. Further, for example, if information on a communication device 110 that performs high-priority use (e.g., PAL) has been registered by a user in advance in the communication control device 130, the evaluation may be performed on the basis of this information. For example, in NPL 2 (WINNF-TS-0112), the information on the communication device 110 is called a cluster list.

Further, in any of the above calculations, when using location information of a communication device, the spectrum availability may be determined by correcting location information and coverage using location uncertainty.

The spectrum grant processing does not necessarily have to be executed due to reception of the spectrum grant request. For example, the communication control device 130 may proactively perform spectrum grant processing without a spectrum grant request after normal completion of the registration procedure. Further, for example, the spectrum grant processing may be performed at regular intervals. In such cases, the above-described REMs, lookup table, or similar information table may be created. Accordingly, permissible frequencies can be determined only by the location information, and thus the communication control device 130 can rapidly return a response after receiving the spectrum grant request.

<2.4 Spectrum Use Notification/Heartbeat>

The spectrum use notification is a procedure in which a wireless system using the frequency band notifies the communication control device 130 of spectrum use based on communication parameters permitted for use in the spectrum grant procedure. A communication device 110 that makes a spectrum use notification on behalf of the wireless system may be the same as or different from the communication device 110 that has performed the procedures so far. Typically, the communication device 110 notifies the communication control device 130 of a notification message including information that can identify the communication device 110.

It is desirable that the spectrum use notification be made periodically until the communication control device 130 refuses spectrum use. In this case, the spectrum use notification is also called a heartbeat.

After reception of the spectrum use notification, the communication control device 130 may determine whether spectrum use (in other words, radio wave transmission at a permitted frequency) is started or continued. Examples of a determination method may include confirmation of the spectrum use information of the primary system. Specifically, it is possible to determine whether to permit or deny the start or continuation of the spectrum use (radio transmission at the permitted frequency) on the basis of change in the use spectrum of the primary system, change in a spectrum use situation of a primary system in which radio wave use is not regular (e.g., a shipboard radar of CBRS in US), or the like. When the start or continuation is permitted, the communication device 110 may start or continue the spectrum use (radio transmission at the permitted frequency).

After the spectrum use notification is received, the communication control device 130 may instruct the communication device 110 to reconfigure the communication parameters. Typically, the reconfiguration of the communication parameters can be instructed in the response of the communication control device 130 to the spectrum use notification. For example, information on recommended communication parameters (hereinafter referred to as recommended communication parameter information) can be provided. It is desirable for the communication device 110 that has received the recommended communication parameter information to perform the spectrum grant procedure described in

<2.4> again using the recommended communication parameter information.

<2.5 Supplement to Various Procedures>

The various procedures do not necessarily need to be implemented separately, as will be described below. For example, two different procedures may be realized by substituting a third procedure having roles of the two different procedures. Specifically, for example, the registration request and the available spectrum information query request may be integrally notified. Further, for example, the spectrum grant procedure and the spectrum use notification may be performed integrally. Of course, the present disclosure is not limited to the combinations thereof, and three or more procedures may be integrally performed. Further, as described above, one procedure may be divided and performed a plurality of times.

Further, the expression "acquire" or similar expressions in the present disclosure does not necessarily mean acquisition according to the procedures described in the present disclosure. For example, although it is described that the location information of the communication device 110 is used for the available spectrum evaluation processing, this means that it is not always necessary to use information acquired in the registration procedure, and when location information is included in the available spectrum query procedure request, the location information may be used. In other words, the procedure for acquisition described in the present disclosure is an example, and acquisition by another procedure is also permitted within the scope of the present disclosure and within the scope of technical feasibility.

Further, the information described as being included in the response from the communication control device 130 to the communication device 110 may be actively notified from the communication control device 130 using a push scheme, if possible. As a specific example, the available spectrum information, the recommended communication parameter information, radio wave transmission continuation deny notification, and the like may be notified using a push scheme.

<2.6 Various Procedures Regarding Terminal>

The description has focused on processing in the communication device 110A. However, depending on embodiments, not only the communication device 110A but also the terminal 120 and the communication device 110B may operate under the control of the communication control device 130. Accordingly, a scenario in which communication parameters are determined by the communication control device 130 is assumed. Even in such a case, it is basically possible to use the procedures described in <2.1> to <2.4>. However, unlike the communication device 110A, the terminal 120 and the communication device 110B need to use frequencies managed by the communication control device 130 for the backhaul link and cannot arbitrarily transmit radio waves. Therefore, it is desirable to start backhaul communication for accessing the communication control device 130 for the first time since detection of radio waves or an authorization signal transmitted by the communication device 110A (a communication device 110 capable of providing a wireless communication service or a master communication device 110 in a master-secondary type).

Meanwhile, under the control of the communication control device 130, acceptable communication parameters may be set for the terminal and the communication device 110B for the purpose of protecting the primary system. However, the communication control device 130 cannot know the location information of these devices in advance. Further, these devices are highly likely to have mobility. Accordingly, the location information is dynamically updated. Depending on the legal system, re-registration in the communication control device 130 may be obligatory when the location information changes a certain amount or more.

In consideration of such various use forms and operation forms of the terminal 120 and the communication device 110, two types of communication parameters listed below are defined in the TVWS operation form (NPL 4) set by the Office of Communication (Ofcom).

- Generic Operational Parameters
- Specific Operational Parameters

The generic operational parameters are communication parameters defined in NPL 4 as "parameters that can be used by any slave WSD located in the coverage area of a predetermined master WSD (corresponding to the communication device 110)". A feature is that they are calculated by a WSDB without using the location information of the slave WSD.

The generic operational parameters can be provided by unicast or broadcast from the communication device 110 that has been already granted by the communication control device 130 to transmit radio waves. For example, a broadcast signal represented by the Contact Verification Signal (CVS) defined in Part 15 Subpart H of the FCC Rules of the United States can be used. Alternatively, they may be provided by a broadcast signal specific to a wireless interface. This makes it possible for the terminal 120 or the communication device 110B to handle them as communication parameters used for radio wave transmission for the purpose of accessing the communication control device 130.

The specific operational parameters are communication parameters defined in NPL 4 as "parameters that can be used by a specific slave white space device (WSD)". In other words, they are communication parameters calculated using device parameters of the slave WSD corresponding to the terminal 120. A feature is that they are calculated by a white space database (WSDB) using the location information of the slave WSD.

The CPE-CBSD handshake procedure defined in NPL 5 can be regarded as another form of a procedure for terminals. CPE-CBSD does not have a wired backhaul line and accesses the Internet via BTS-CBSD. Therefore, it is not possible to obtain a grant to transmit radio waves from an SAS for a CBRS band without special regulations and procedures. The CPE-CBSD handshake procedure allows the CPE-CBSD to transmit radio waves with the same maximum EIRP and minimum required duty cycle as those of a terminal (EUD) until it obtains a grant to transmit radio waves from the SAS. Accordingly, the communication device 110B can construct a line for obtaining a grant to transmit radio waves from the communication control device 130 by setting the transmission EIRP to the maximum EIRP of terminals and then performing wireless communication with the communication device 110A at the minimum required duty cycle. After obtaining the grant to transmit radio waves, it is possible to use up to the maximum EIRP specified for communication devices within the range of grant.

<2.7 Procedures Generated Between Communication Control Devices>

<2.7.1 Information Exchange>

The communication control device 130 can exchange management information with other communication control devices 130. It is desirable that at least the following information be exchanged.

- Information related to the communication device 110
- Area information
- Protection target system information

The information related to the communication device 110 includes at least registration information and communication parameter information of the communication device 110 operating under the grant of the communication control device 130. Registration information of communication devices 110 that do not have granted communication parameters may also be included.

The registration information of the communication device 110 is typically device parameters of the communication device 110 registered in the communication control device 130 in the registration procedure described above. Not all registered pieces of information is necessarily exchanged. For example, information that may correspond to personal information need not be exchanged. Further, at the time of exchanging the registration information of the communication device 110, the registration information may be encrypted and exchanged, or the information may be exchanged after making the contents of the registration information ambiguous. For example, information converted into a binary value or information signed using an electronic signature mechanism may be exchanged.

The communication parameter information of the communication device 110 is typically information related to communication parameters that are currently used by the communication device 110. It is desirable that at least information indicating a frequency to be used and a transmission power be included. Other communication parameters may be included.

The area information is typically information indicating a predetermined geographical area. This information can include area information of various attributes in various aspects.

For example, like the PAL protection area (PPA) disclosed in NPL 2 (WINNF-TS-0112), the area information may include protection area information of the communication device 110 serving as a high-priority secondary system. The area information in this case can be represented, for example, by a set of three or more coordinates indicating geographic positions. Further, for example, if a plurality of communication control devices 130 can refer to a common external database, the area information can be represented by a unique ID, and the actual geographic area can be referenced from the external database using the ID.

Further, for example, information indicating a coverage of the communication device 110 may be included. The area information in this case can also be represented, for example, by a set of three or more coordinates indicating geographical locations. Further, the coverage can be assumed to be a circle having the geographical location of the communication device 110 as a center and can be represented by information indicating the size of the radius, for example. Further, if a plurality of communication control devices 130 can refer to a common external database that records area information, for example, the information indicating the coverage can be represented by a unique ID, and the actual coverage can be referenced from the external database using the ID.

In addition, as another aspect, information related to area divisions predetermined by administration or the like can also be included. Specifically, for example, it is possible to indicate a certain area by indicating an address. Further, for example, a license area can be similarly represented.

As further another aspect, area information does not necessarily need to represent a planar area and may represent a three-dimensional space. For example, it may be represented using a spatial coordinate system. Further, for example, information indicating a predetermined closed space, such as the number of floors of a building, a floor, a room number, and the like may be used.

The protection target system information is, for example, information of a wireless system handled as a protection target, such as the above-mentioned incumbent tier. Situations in which this information must be exchanged include, for example, situations requiring cross-border coordination. It is quite conceivable that neighboring countries or regions have different protection targets in the same band. In such a case, the protection target system information can be exchanged between communication control devices 130 belonging to different countries or regions as needed.

As another aspect, protection target system information can include information on a secondary licensee and information on a wireless system operated by the secondary licensee. The secondary licensee is specifically a lessee of a license, and for example, it is assumed that the secondary licensee borrows a PAL from the holder and operates their own wireless system. If the communication control device 130 independently manages leases, it can exchange information on the secondary licensee and information on the wireless system operated by the secondary licensee with another communication control device for the purpose of protection.

These pieces of information can be exchanged between the communication control devices 130 regardless of the decision-making topology applied to the communication control device 130.

Further, these pieces of information can be exchanged in a variety of ways. An example is listed below.

- ID designation scheme
- Period designation scheme
- Area designation scheme
- Dump scheme

The ID designation scheme is a scheme of acquiring information corresponding to an ID by using the ID assigned in advance to identify information managed by the communication control device 130. For example, it is assumed that a communication device 110 with ID: AAA is managed by a first communication control device 130. In this case, a second communication control device 130 designates an ID: AAA for the first communication control device 130 to make an information acquisition request. After receiving the request, the first communication control device 130 performs search for information of ID: AAA, and notifies of information on the communication device 110 with ID: AAA, such as registration information communication parameter information, as a response.

The period designation scheme is a scheme in which information satisfying a predetermined condition can be exchanged in a specific designated period.

Examples of the predetermined condition may include whether or not information is updated. For example, when acquisition of the information on the communication device 110 in the specific period is designated by a request, the registration information of the communication device 110 newly registered within the specific period can be notified in a response. Further, the registration information or communication parameter information of the communication device 110 whose communication parameters have been changed within the specific period can also be notified in a response.

Examples of the predetermined condition may include whether or not the information has been recorded by the communication control device 130. For example, when the acquisition of the information on the communication device 110 in the specific period is designated by a request, the registration information or communication parameter information recorded by the communication control device 130 in the period can be notified in a response. When the information is updated in that period, latest information in the period may be notified. Alternatively, an update history may be notified for each piece of information.

In the area designation scheme, a specific area is designated, and information of the communication device 110 belonging to the area is exchanged. For example, when acquisition of the information on the communication device 110 in the specific area is designated by a request, the registration information or the communication parameter information of the communication device 110 installed in the specific area can be notified in a response.

The dump scheme is a scheme for providing all pieces of information recorded by the communication control device 130. It is desirable for at least the information related to the communication device 110 or the area information to be provided by using the dump scheme.

All the descriptions of the exchange of information between the communication control devices 130 so far are based on a pull scheme. Specifically, this is a form in which information corresponding to the parameter designated by the request is returned as a response, and can be realized by an HTTP GET method as an example. However, it is not necessary to be limited to the pull scheme, and information may be actively provided to another communication control device 130 by a push scheme. The push scheme can be realized by an HTTP POST method as an example.

<2.7.2 Order and Request Procedure>

The communication control devices 130 may perform a command or a request to each other. Specifically, one example may include the reconfiguration of the communication parameters of the communication device 110. For example, if it is determined that a first communication device 110 managed by a first communication control device 130 receives significant interference from a second communication device 110 managed by a second communication control device 130, the first communication control device 130 may request the second communication control device 130 to change the communication parameters of the second communication device 110.

Another example may include reconfiguration of the area information. For example, if there is a fault in calculation of coverage information or protection area information regarding the second communication device 110 managed by the second communication control device 130, the first communication control device 130 may request the second communication control device 130 to reconstruct the area information. In addition thereto, an area information reconstruction request may be made for various reasons.

<2.8 Information Transfer Means>

Notification (signaling) between entities described so far can be realized via various mediums. E-UTRA or 5G NR will be described by way of example. Of course, implementations are not limited to these.

<2.8.2 Signaling between Communication Control Device 130 and Communication Device 110>

A notification from the communication device 110 to the communication control device 130 may be made, for example, in an application layer. For example, the notification may be implemented using Hyper Text Transfer Protocol (HTTP). Signaling can be performed by describing the required parameters in an HTTP message body according to a predetermined format. Further, when the HTTP is used, a notification from the communication control device 130 to the communication device 110 is also made according to an HTTP response mechanism.

<2.8.3 Signaling between Communication Device 110 and Terminal 120>

A notification from the communication device 110 to the terminal 120 may be made using, for example, at least one of radio resource control (RRC) signaling, system information (SI), and downlink control information (DCI). Further, there are, as downlink physical channels, PDCCH: Physical Downlink Control Channel, PDSCH: Physical Downlink Shared Channel, PBCH: Physical Broadcast Channel, NR-PDCCH, NR-PDSCH, NR-PBCH, and the like, but at least one of these may be used for implementation.

A notification from the terminal 120 to the communication device 110 may be made using, for example, radio resource control (RRC) signaling or uplink control information (UCI). Further, the notification may be made using an uplink physical channel (PUCCH: Physical Uplink Control Channel, PUSCH: Physical Uplink Shared Channel, or PRACH: Physical Random Access Channel).

The signaling is not limited to the physical layer signaling described above, but may be performed in a higher layer. For example, at the time of performing in the application layer, the signaling may be performed by describing the required parameters in the HTTP message body according to a predetermined format.

<2.8.4 Signaling between Terminals 120>

An example of a flow of signaling in a case in which device-to-device (D2D) or vehicle-to-everything (V2X), which is communication between the terminals 120 is assumed as communication of the secondary system is illustrated in Fig. 6. D2D or V2X, which is communication between the terminals 120, may be performed using a physical sidelink channel (PSCCH: Physical Sidelink Control Channel, PSSCH: Physical Sidelink Shared Channel, and PSBCH: Physical Sidelink Broadcast Channel). The communication control device 130 calculates communication parameters to be used by the secondary system (T101) and notifies the communication device 110 of the secondary system of the communication parameters (T102). A value of the communication parameter may be determined and notified, or conditions indicating a range of the communication parameter or the like may be determined and notified. The communication device 110 acquires the communication parameters to be used by the secondary system (T103), and configures the communication parameters to be used by the communication device 110 itself (T104). The terminal 120 is notified of communication parameters to be used by the terminal 120 under the control of the communication device 110 (T105). Each terminal 120 under the control of the communication device 110 acquires the communication parameters to be used by the terminal 120 (T106) and configures them (T107). Then, communication with another terminal 120 of the secondary system is performed (T108).

Communication parameters in a case in which a target frequency channel for spectrum access is used in a side link (direct communication between the terminals 120) may be notified in a form associated with a resource pool for a side link in the target frequency channel, acquired, or configured. The resource pool is a radio resource for a sidelink configured by a specific frequency resource or time resource. Examples of the frequency resources include a resource block and a component carrier. Examples of the time resources include a radio frame, a subframe, a slot, and a mini-slot. At the time of configuring a resource pool in a frequency channel that is a spectrum access target, the communication device 110 configures the resource pool in the terminal 120 on the basis of at least one of RRC signaling, the system information, and the downlink control information. The communication device 110 also configures the communication parameters to be applied in the resource pool and the sidelink, in the terminal 120, on the basis of at least one of the RRC signaling from the communication device 110 to the terminal 120, the system information, and the downlink control information. The notification of a resource pool configuration and the notification of communication parameters to be used in a sidelink may be performed at the same time or separately.

«3. Embodiments of Present Invention»

<First Embodiment>

In the following, a CBRS communication system is assumed as the subject communication system according to the present embodiment. However, the present invention is not limited to application to CBRS, but may be applicable to other types of communication systems. In that case, the present invention can be implemented by substituting the terms, techniques, means, methods, algorithms, and the like referred to in the following description with equivalents or those that produce the same effect.

In the present embodiment, in CBRS, a communication control device (SAS) allocates an interference margin on a per-group basis (groups of communication devices (CBSD)) related to interference margin allocation (allocating a cumulative acceptable amount of interference of the protected system among the groups). Furthermore, the SAS reallocates the interference margin allocated to a group among the CBSDs belonging to the group. In this way, a mechanism is provided for effectively allocating an interference margin on a per-group basis and reallocating the interference margin within the same group. Specifically, the communication control device (SAS) in the present embodiment acquires information about each communication device (CBSD) from the communication device, and identifies a group to which each communication device belongs based on the acquired information. The SAS allocates an interference margin to each group, and further performs, for each group, processing of allocating the interference margin among the communication devices belonging to the group based on an interference margin reallocation policy associated with the group (reallocation of the interference margin for each group).

The group subjected to the interference margin allocation refers to a group corresponding to the Interference Margin Group (IMG) described in the Background Art. In the present embodiment, the group subjected to the interference margin allocation is called an enhanced IMG (eIMG) to distinguish it from an IMG defined in WInnForum CBRS Release 1. In the following description, communication devices belonging to the group are handled as CBSDs belonging to an eIMG, unless otherwise specified.

Fig. 7 illustrates an overall configuration diagram of a communication system according to the present embodiment. The communication system in Fig. 7 includes an SAS 130, which is a communication control device, and a plurality of CBSDs 110, which are communication devices. A plurality of CBSDs 110 belong to one of a plurality of groups (eIMGs). In the example of Fig. 7, there are two groups, eIMG_A and eIMG_B. Three CBSDs 110 belong to eIMG_A, and four CBSDs 110 belong to eIMG_B. eIMG_A and eIMG_B may be configured by the same communication carrier (CBSD user) or by different communication carriers.

The SAS 130 acquires, as part of information on a CBSD 110, information on the group (eIMG) to which the CBSD 110 belongs. Here, the SAS 130 may acquire information on the eIMG to which the CBSD 110 belongs by utilizing the Enhanced CBSD Group Handling feature in WInnForum CBRS Release 2 (see NPL 2). According to the Enhanced CBSD Group Handling feature, a CBSD notifies an SAS of grouping parameters (groupingParam) related to information on all groups to which the CBSD belongs, and the SAS notifies the CBSD of grouping configurations (groupingConfig), which are parameter configuration information specific to the group to which the CBSD belongs.

According to the Enhanced CBSD Group Handling feature, the grouping parameters (groupingParam) can be notified using a registration request, a spectrum inquiry request, a spectrum grant request (grant request), and a spectrum use notification (heartbeat request). In the present embodiment as well, the CBSD 110 may notify of grouping parameters (groupingParam) included in any of these requests.

According to the Enhanced CBSD Group Handling feature, it is specified that grouping configurations (groupingConfig) are notified at least as a response to grouping parameters (groupingParam). In the present embodiment as well, the SAS 130 may notify of grouping configurations (groupingConfig) as a response to grouping parameters (groupingParam). Further, according to the Enhanced CBSD Group Handling feature, grouping configurations (groupingConfig) can be notified using a spectrum inquiry response, a spectrum grant response (grant response), and a spectrum use response (heartbeat response). In the present embodiment as well, the SAS 130 may include grouping configurations (groupingConfig) in any of these responses.

Fig. 8 illustrates an example of a sequence in which grouping parameters (groupingParam) are notified from a CBSD 110 to an SAS 130, and in response to this, grouping configurations (groupingConfig) are notified from the SAS to the CBSD. Although only one CBSD 110 is illustrated in Fig. 8, the other CBSDs 110 also perform the same operations with the SAS 130. Fig. 8 generally illustrates configuration examples of grouping parameters (groupingParam) and grouping configurations (groupingConfig). Details of the grouping parameters (groupingParam) and the grouping configurations (groupingConfig) will be described below.

[Grouping Parameters (groupingParam)]

Grouping parameters (groupingParam) are an array of GroupParam objects that represent one or more groups to which the CBSD belongs, respectively. Each GroupParam object includes the following information.

groupType: A required parameter. A string-valued parameter indicating the type of a group.
groupId: A required parameter. A string-valued parameter indicating identification information (identifier) for identifying the group.
groupInfo: An optional parameter. An object-type (GroupInfo) parameter including detailed information about the group identified by groupType and groupId. Required in some cases depending on groupType, or groupId, or combination of groupType and groupId.

A CBSD includes, in groupingParam, at least a GroupParam object related to the eIMG to which the CBSD belongs. For a CBSD belonging to a plurality of groups, a plurality of GroupParam objects corresponding to the plurality of groups, respectively, are included in groupingParam.

The parameters in a GroupParam object is preferably configured according to rules defined by one of the following options.

[Option 1]

In Option 1, groupType uses a generalized value (not including information for identifying an interference margin reallocation policy). A parameter indicating the interference margin reallocation policy within a group (eIMG) is added separately as another item. Parameter configuration for Option 1 is listed below.

groupType: A string value indicative of eIMG. Preferably predefined. For example, the string "ENH_INTERFERENCE_MARGIN_GROUP" used.
groupId: A string value indicating identification information (identifier) for identifying which eIMG it belongs to. Preferably be global unique.
groupInfo: Define eIMG-specific parameters in the GroupInfo object. The specific parameters include, for example, enhancedImgInfo parameter of EnhancedImgInfo object-type. In that case, the parameters preferably include at least the following information.

- Information indicating interference margin reallocation policy: Information indicating an interference margin reallocation policy applied to the eIMG identified by groupId (e.g., a number or identifier, etc.). An example of the interference margin reallocation policy will be described later.
- CBSD-specific information required for interference margin reallocation processing: CBSD-specific information that needs to be provided to the SAS to implement the interference margin reallocation method identified by the information indicating interference margin reallocation policy. An example of the CBSD-specific information is information about beam patterns to be formed by the CBSD.

[Option 2]

In Option 2, an interference margin reallocation policy is associated with groupType. Parameter configuration for Option 2 is listed below.

groupType: A string value indicative of a group (eIMG) having a predetermined interference margin reallocation policy. The string value is preferably predefined. A string used depending on the name of the interference margin reallocation policy desired to apply. For example, for an interference margin reallocation policy defined with a name such as "ENH_IMG_TYPE_A" or "ENH_IMG_TYPE_B", if the policy for "ENH_IMG_TYPE_A" is desired to apply, groupType is set to the string value of "TYPE A". If the policy for "ENH_IMG_TYPE_B" is desired to apply, groupType is set to the string value of "TYPE B".
groupId: A string value indicating identification information (identifier) for identifying which eIMG it belongs to. Preferably be global unique.
groupInfo: Define eIMG-specific parameters in the GroupInfo object. For example, enhancedImgInfo parameter of EnhancedImgInfo object-type is included. In that case, the parameters preferably include at least the following information.

- CBSD-specific information required for interference margin reallocation processing: CBSD-specific information that needs to be provided to the SAS to implement the interference margin reallocation method identified by the information indicating an interference margin allocation policy associated with groupType. An example of the CBSD-specific information is information about beam patterns to be formed by the CBSD.

[Grouping Configurations (groupingConfig)]

Grouping configurations (groupingConfig) include an array of GroupConfig objects that represent parameter configuration information specific to one group. For a CBSD belonging to a plurality of groups, a plurality of GroupConfig objects corresponding to the plurality of groups, respectively, are included in grouping configurations (groupingConfig). Each GroupConfig object includes the following information.

groupType: A required parameter. A string-valued parameter indicating the type of a group.
groupId: A required parameter. A string-valued parameter indicating identification information (identifier) for identifying the group.
supportedBySas: A conditional parameter. A Boolean-type parameter indicating whether an SAS supports groups identified by groupType, or groupId, or combination of groupType and groupId. This parameter is required to notify of grouping configurations (groupingConfig) as a response to grouping parameters (groupingParam).
groupConfigInfo: An optional parameter. An object-type (GroupConfigInfo) parameter including configuration information specific to the group identified by groupType and groupId. Required in some cases depending on groupType, or groupId, or combination of groupType and groupId.

groupInfoResponse: An optional parameter. An object-type (GroupInfoResponse) parameter including information for notifying of processing results of parameters in a GroupParam object notified from an CBSD. Required in some cases depending on groupType, or groupId, or combination of groupType and groupId.

[Specific Example of Configuring Grouping Configurations (groupingConfig)]

When an SAS notifies of grouping configurations (groupingConfig) in response to grouping parameters (groupingParam) notified from a CBSD, the SAS configures the parameters in the GroupConfig object corresponding to each GroupParam object, for example, as follows.

groupType: A string value indicating the type of a group, represented by the corresponding GroupParam object.
groupId: A string-valued parameter indicating identification information (identifier) for identifying the group, represented by the corresponding GroupParam object.
supportedBySas: If the group identified by groupType, or groupId, or combination of groupType and groupId is supported, the value is "true"; otherwise, the value is "false".
groupConfigInfo: Set depending on groupType, or groupId, or combination of groupType and groupId.
groupInfoResponse: Depending on groupType, or groupId, or combination of groupType and groupId. If the above-described groupInfo includes a GroupParam object related to an eIMG and is based on Option 1, and the SAS does not support the interference margin reallocation policy identified in the "Information indicating interference margin reallocation policy", it is desirable to use a groupInfoResponseCode parameter in the groupInfoResponse to notify that the interference margin reallocation policy is not supported.

An example of communication control will be described below in which a group subjected to interference margin allocation (eIMG) includes at least one communication device that performs beamforming, and an interference margin reallocation policy is used that reallocates an interference margin according to a beam pattern used by the communication device.

Fig. 9 illustrates an example in which four CBSDs (base stations) are grouped into two by CBSD users (forming two eIMGs). A protected entity 200 and four CBSDs 110 corresponding to CBSD1, CBSD2, CBSD3, and CBSD4 are illustrated. The SAS 130 is omitted from the illustration. CBSD1 and CBSD2 belong to the same group eIMG_A, and CBSD3 and CBSD4 belong to the same group eIMG_B. Each CBSD can transmit a beam in one beam pattern selected from among nine beam patterns identified by #1 to #9. However, although each CBSD can transmit beams in two or more beam patterns simultaneously, the following description will be given assuming that one beam is transmitted simultaneously.

Fig. 10 is a sequence diagram illustrating an example of an operation between the CBSD 110 and the SAS 130.

Each CBSD notifies the SAS of grouping parameters, which includes, as a groupInfo parameter (group information), beam pattern information that can be used at least with other CBSDs in the same eIMG at the same frequency (channel) at the timing of transmitting a spectrum grant request (grant request) or before processing based on the grant request is performed by the SAS (S101). The SAS acquires the beam pattern information from groupInfo. The SAS transmits grouping configuration to the CBSD as a response (S102).

In the example of Fig. 9, CBSD1 notifies the SAS of information on beam patterns #1 to #9 that can be used on the same channel as the other CBSD2 in the same eIMG_A as group information (group Info parameter). Similarly, CBSD2 notifies the SAS of information on beam patterns #1 to #9 that can be used on the same channel as the other CBSD1 in the same eIMG_A as group information (group Info parameter). The same applies to CBSD3 and CBSD4, which belong to the same eIMG_B.

In order to request a spectrum grant of the SAS, each CBSD transmits a spectrum grant request (grant request) to the SAS in the spectrum grant procedure (S103). In the present embodiment, the following two types of grant requests are assumed.

EIRP-specified (= conventional specification scheme) grant request: A request for specifying a frequency range and a maximum EIRP (EIRP: Equivalent Isotropic Radiated Power). The frequency range includes one or more frequencies (channels).

Conducted-Power-specified grant request: A grant request for specifying a frequency range and a maximum conducted power. The frequency range includes one or more frequencies (channels).

The IERP and antenna power are examples of the transmission power with which radio signals are transmitted by a CBSD.

For a Conducted-Power-specified grant request used, the SAS acquires beam pattern information that can be used by a CBSD on the same channel as the other CBSDs in the same eIMG at the time of receiving a grant request or before processing based on the grant request is performed. If the SAS grants a spectrum grant (grant for using channels) to the CBSD, the SAS manages a combination of the frequency range (channels), a value of the conducted power, and the beam pattern information as first grant parameters for the CBSD.

When an EIRP-specified grant request is used, the SAS manages the frequency range (channels) and maximum EIRP specified in the grant request as second grant parameters. Even when an EIRP-specified grant request is used, the SAS may calculate the maximum antenna power (conducted power) based on the maximum EIRP specified in the grant request and the beam pattern information of the CBSD. The SAS may store the calculated maximum antenna power (conducted power) in association with the second grant parameters. If the CBSD includes the beam pattern information in the EIRP-specified grant request, the SAS may acquire the beam pattern information from the grant request.

Based on the grant request from each CBSD, the SAS performs interference margin allocation processing (i.e., IAP) to each eIMG (S104). Typically, the SAS performs interference margin allocation processing to each eIMG at the timing of coordinated periodic activities among SASs (CPAS). The CPAS is processing that the SAS (communication control device) performs once every 24 hours with one or more other SASs. In the CPAS, calculation processing related to higher-tier protection of protected entities (calculation processing for protecting higher tiers from interference from lower tiers) is performed. In other words, the CPAS performs calculations for protecting protected entities from interference from lower tiers that have a lower priority for radio wave use than the protected entities. The CBSDs (communication devices) belong to a tier that has a lower priority for radio wave use than the protected entities. The SAS performs the following processing prior to the CPAS. However, the SAS may also perform the following processing as part of the IAP.

Specifically, the SAS determines a desired interference margin (first interference margin) for each eIMG based on the first grant parameters or the second grant parameters according to the type of grant request of each CBSD (Conducted-Power-specified or EIRP-specified) in the eIMG. As an example, the maximum value of estimated amount of interference (interference budgets) calculated based on the first grant parameters or the second grant parameters of each CBSD is set as the desired interference margin of the CBSD. The sum of the desired interference margins of the CBSDs in the same eIMG is the desired interference margin for the same eIMG.

Here, the desired interference margin of the CBSD using the first grant parameters varies depending on the beam pattern used in the calculation. Accordingly, the SAS uses the desired interference margin of each CBSD such that the sum of the desired interference margins of the CBSDs in an eIMG is maximized. Therefore, the desired interference margin of the eIMG thus obtained is the maximum desired interference margin of the eIMG (first interference margin). Further, the SAS may convert the first grant parameters corresponding to the desired interference margin of each CBSD at this time into second grant parameters to be managed.

After starting the CPAS, the SAS performs full activity dump (FAD) exchange with other SASs. The FAD includes, for example, information on grants for all CBSDs under the SAS, and information on the locations and antenna characteristics of the CBSDs. In this FAD exchange, the SAS notifies other SASs of the second grant parameters (including those obtained by converting the first grant parameters) for the CBSD grant information. Some SASs only support the second grant parameters, which corresponds to the conventional scheme. The above-described conversion from the first grant parameters to the second grant parameters is performed taking such SASs into account. If all SASs can support the first grant parameters, the first grant parameters may be notified to the other SASs.

For a group of CBSDs (eIMG) managed by another SAS, the SAS determines the sum of the maximum desired interference margins of the CBSDs calculated using the second grant parameters notified from the other SAS as the desired interference margin (first interference margin) of that eIMG.

After that, the SAS performs the IAP after processing such as creating or updating a purge list. The purge list is a list of CBSD grants, and is also a list all to be discarded when a protected system such as a radar detects use of the same frequency. The grants of the CBSDs in an eIMG may or may not be stored in the purge list. In the IAP, interference margins are allocated on a per-eIMG basis for the grants of CBSDs belonging to an eIMG, and interference margins are allocated on a per-grant basis for the grants of CBSDs that do not belong to the eIMG. The following is a specific example in which all targets of the IAP for a specific protected system (primary system) belong to the same SAS.

Fig. 11 illustrates an example of beam patterns and EIRPs that maximize the sum of the desired interference margins of two CBSDs in each eIMG. The EIRPs are omitted from the illustration. Specifically, beam patterns #5 are selected as a combination of beam patterns that maximizes the sum of the desired interference margins of CBSD1 and CBSD2 in eIMG_A. Beam patterns #5 are selected as a combination of beam patterns that maximizes the sum of the desired interference margins of CBSD3 and CBSD4 in eIMG_B.

In Fig. 12, (A) illustrates an example of the desired interference margin (first maximum interference margin) calculated for each eIMG. In this example, the desired interference margin of eIMG_A is equal to the sum of the maximum values of the desired interference margins of CBSD1 and CBSD2. The desired interference margin of eIMG_B is equal to the sum of the maximum values of the desired interference margins of CBSD3 and CBSD4. The sum of the desired interference margin of eIMG_A and the desired interference margin of eIMG_B exceeds an acceptable amount of interference (threshold $I_{Th}$) of the protected entity.

In this case, by performs the IAP based on the desired interference margin of each eIMG, the SAS adjusts the desired interference margin of the eIMG so that the sum of the interference margins of the eIMGs is equal to or less than the threshold $I_{Th}$, and determines an adjusted maximum interference margin (first interference margin). For example, processing of reducing the desired interference margin (first maximum interference margin) of each eIMG by a certain ratio or a certain amount may be recursively repeated until the sum of the reduced interference margins is equal to or less than the threshold. Instead of the method of reduction by a certain ratio or a certain amount for each eIMG, a method of reduction by a different ratio or a different amount for the eIMGs is also possible. For example, the ratio or amount for reduction may be variable depending on the number of CBSDs belonging to an eIMG.

In Fig. 12, (B) illustrates an example in which the maximum interference margin (second maximum interference margin or first interference margin) of each of eIMG_A and eIMG_B is determined so that the sum of the interference margins of eIMG_A and eIMG_B is equal to or less than the threshold $I_{Th}$. In the illustrated example, the sum of the interference margins of eIMG_A and eIMG_B is equal to the acceptable amount of interference (threshold). However, the sum may be less than the threshold.

Within the range of the adjusted maximum interference margin (second maximum interference margin or first interference margin) determined for each eIMG, the SAS determines or adjusts an interference margin (second interference margin) for each CBSD belonging to the eIMG. Within the range of the adjusted maximum interference margin of the eIMG, the SAS determines one or more combinations of beam pattern and EIRP, or combinations of beam pattern and conducted power. In other words, the SAS determines a combination of beam pattern and EIRP/conducted power for each CBSD in an eIMG so that the sum of the interference margins (second interference margins) of the CBSDs belonging to the eIMG is equal to or less than the adjusted maximum interference margin (second maximum interference margin or first interference margin) of the eIMG.

As a specific operation example, the SAS may fix the EIRP of each CBSD, combine the beam patterns of the CBSDs, and search for a combination of beam patterns in which the sum of the interference margins (second interference margins) of the CBSDs does not exceed the adjusted maximum interference margin. If such a combination is not found, the EIRP of each CBSD may be reduced by a certain ratio or a certain amount, and similarly, a combination of beam patterns may be searched for. By other methods, a combination of beam pattern and EIRP may be searched for.

In Fig. 12, (C) illustrates an example in which a beam pattern and an EIRP of each CBSD of each eIMG are determined so that the sum of the interference margins of the CBSDs of the eIMG is equal to or less than the adjusted maximum interference margin (EIRP is omitted from the illustration). The sum of the interference margins of CBSD 1 and CBSD2 in eIMG_A is equal to or less than the adjusted maximum interference margin (second maximum interference margin or first interference margin) of eIMG_A. The sum of the interference margins of CBSD3 and CBSD4 in eIMG_B is equal to or less than the adjusted maximum interference margin (second maximum interference margin or first interference margin) of eIMG_B.

Fig. 13 illustrates an example of a combination of beam patterns determined for the CBSDs in each eIMG. In eIMG_A, beam patterns #3 and #9 are determined for CBSD 1 and CBSD2, respectively, together with their respective EIRPs (not illustrated). In eIMG_B, beam patterns #5 and #7 are determined for CBSD3 and CBSD4, respectively, together with their respective EIRPs (not illustrated). The combinations of beam patterns illustrated in (C) of Fig. 12 are an example, and other combinations of beam patterns are possible.

The SAS notifies each CBSD in each eIMG of information indicating the combination of the beam pattern and EIRP/conducted power determined in accordance with the second maximum interference margin depending on the type of grant request (S105). In this example, it is assumed that each eIMG belongs to the same SAS. However, if there is an eIMG of CBSDs under another SAS, the information can be notified to the CBSDs via the other SAS.

Each CBSD in each eIMG determines a beam pattern and an EIRP based on the information notified by the SAS, and emits radio waves (S106). If information on a plurality of combinations is notified, the CBSD may cooperate to determine which combination to use, or the priority order of use for the SAS may be included in the information to be notified. The SAS may notify each CBSD in each eIMG of the determined second maximum interference margin.

When the CBSDs in each eIMG receive information indicating the adjusted maximum interference margin (second maximum interference margin or first interference margin) from the SAS, each of the CBSDs may determine a beam pattern and an EIRP to be used in cooperation with each other so that the margin indicated by the information is not exceeded. In other words, each of the CBSDs in each eIMG may cooperatively determine a combination of beam pattern and EIRP such that the sum of the interference margins of the CBSDs does not exceed the adjusted maximum interference margin of the eIMG. This method also makes it possible to ensure that the cumulative amount of interference to the protected entity by the CBSDs in an eIMG does not exceed the adjusted maximum interference margin of the eIMG.

Fig. 14 is a block diagram of a communication system according to the first embodiment. The communication system in Fig. 14 includes a communication device 110 and a communication control device 130. Although only one communication device is illustrated in the figure, a plurality of communication devices may be provided. Similarly, although one communication control device 130 is illustrated in Fig. 1, a plurality of communication control devices may be provided. The SAS described with reference to Figs. 7 to 13 has the configuration of the SAS 130 illustrated in Fig. 14, and each CBSD described with reference to Figs. 7 to 13 has the configuration of the CBSD 110 illustrated in Fig. 14. In the following description, it is assumed that the communication device 110 is a CBSD and the SAS 130 is an SAS.

The SAS 130 includes a reception unit 31, a processing unit 32, a control unit 33, a transmission unit 34, and a storage unit 35. The transmission unit 34 and the reception unit 31 each include at least one antenna. The transmission unit 34 performs processing of transmitting signals to the CBSD 110 and other SASs wirelessly or via wires. The reception unit 31 performs processing of receiving signals from the CBSD 110 and other 130 wirelessly or via wire. The control unit 33 controls the entire SAS 130 by controlling respective elements in the SAS 130.

The storage unit 35 of the SAS 130 stores various information necessary for communication with the CBSD 110 and other SASs 130 in advance. As an example, the storage unit 35 stores information on registered CBSD 110, such as the IDs, location information, maximum transmission power information (EIRP capability value, maximum antenna power, etc.), beam pattern information (beam range information), and antenna transmission power (conducted power) of the CBSD 110. The storage unit 35 also stores information acquired from the CBSD 110 (e.g., grouping parameters, etc.). In addition, information on a grant granted to the CBSD 110 (e.g., beam pattern, frequency (channel), and transmission power value permitted for use) may be stored in the storage unit 35.

The processing unit 32 performs various types of processing according to the present embodiment. The various types of processing described as being performed by the SAS 130 in the above description of the first embodiment and the processing described as being performed by the SAS 130 in the description with reference to Figs. 7 to 13 are performed by the processing unit 32.

For example, the processing unit 32 performs processing related to a registration procedure, a spectrum query procedure, and a spectrum grant procedure, with the CBSD 110. The processing unit 32 also performs the above-described coordinated periodic activities among SASs (CPAS) with one or more other SASs 130.

The processing unit 32 receives grouping parameters (see Fig. 8) from a plurality of CBSDs 110 via their respective requests in the procedures such as the registration procedure, the spectrum query procedure, and the spectrum grant procedure. As an example, the grouping parameters include identification information for identifying one or more groups to which the CBSD 110 belongs. If the processing unit 32 supports the groups based on the identification information, the processing unit 32 classifies the CBSD 110 into the groups. As another example, the grouping parameters include policy information for allocating an interference margin for each of the one or more groups to which the CBSD 110 belongs (interference margin allocation policy information). The processing unit 32 stores in the storage unit 35 the policy information in association with identification information for identifying the group. The processing unit 32 generates grouping configurations (see Fig. 9) as a response to the grouping parameters, and transmits the grouping configurations to the CBSD 110 that has transmitted the grouping parameters.

The processing unit 32 performs processing for the IAP. The processing unit 32 determines a first interference margin that is an amount of interference that is acceptable to be given to a protected entity by at least one group (eIMG) of the plurality of CBSDs 110, based on an acceptable amount of interference (threshold) of the protected entity. The processing unit 32 determines or adjusts a plurality of second interference margins that are amounts of interference that are acceptable to be given to the protected entity by the plurality of CBSDs 110 by allocating (reallocating) the first interference margin among the plurality of CBSDs 110 in the group. Reallocating the first interference margin may be performed based on the above-described interference margin allocation policy information. In this case, the processing unit 32 allocates the first interference margin among the plurality of CBSDs 110 based on the policy information.

The processing unit 32 determines, for each of the plurality of CBSDs 110, a combination of beam pattern and transmission power such that the amount of interference given from the CBSD 110 to the protected entity is equal to or less than the second interference margin. Each of the plurality of CBSDs 110 can transmit beams in a plurality of beam patterns.

If there are a plurality of groups (eIMGs), the processing unit 32 determines a plurality of first interference margins for the plurality of groups as values such that the sum of the plurality of first interference margins is equal to or less than a cumulative acceptable amount of interference of the protected entity. For example, the processing unit 32 determines a plurality of first interference margins (second maximum interference margins) by adjusting desired interference margins (first maximum interference margins) of the plurality of groups such that the sum of the adjusted margins is equal to or less than a cumulative acceptable amount of interference of the protected entity.

Specifically, the desired interference margin (first maximum interference margin) is the maximum value of the sum of the amounts of interference for each group when a combination of beam patterns that maximizes the sum of the amounts of interference for the group is determined for the plurality of CBSDs 110. If the sum of the desired interference margins (first maximum interference margins) of the groups exceeds the cumulative acceptable amount of interference (interference threshold) of the protected entity, the processing unit 32 adjusts the desired interference margins (first maximum interference margins) of the plurality of groups so that the sum of the adjusted margins (second maximum interference margins or first interference margins) is equal to or less than the acceptable amount of interference.

The processing unit 32 determines, for each group, a combination of beam patterns and a combination of transmission powers so that the sum of the amounts of interference of the plurality of CBSDs 110 is equal to or less than the adjusted margin (second maximum interference margin or first interference margin).

The CBSD 110 includes a reception unit 11, a processing unit 12, a control unit 13, a transmission unit 14, and a storage unit 15. The transmission unit 14 and the reception unit 11 each include at least one antenna. The transmission unit 14 performs processing of transmitting signals to the SAS 130 and other CBSDs 110 wirelessly or via wires. The reception unit 11 performs processing of receiving signals from the SAS 130 or other CBSDs 110 wirelessly or via wire. The control unit 13 controls the entire CBSD 110 by controlling respective elements in the CBSD 110. For example, the control unit 13 controls beamforming in the transmission unit 14 based on a beam pattern to be used from among a plurality of available beam patterns.

The storage unit 15 of the CBSD 110 stores various information necessary for communication with the SAS 130 or other CBSDs 110 in advance. The storage unit 15 also stores information related to various performance and specifications of the CBSD 110. For example, the storage unit 15 stores the ID, location information, maximum transmission power information (EIRP capability value, maximum antenna power, etc.), dynamic beam pattern information (beam range information), and antenna transmission power (conducted power) of the CBSD 110. The storage unit 15 also stores information on one or more groups (eIMGs) to which the CBSD 110 belongs. In addition, policy information for reallocating an interference margin to be applied to each of one or more groups to which the CBSD 110 belongs (interference margin allocation policy information) is stored.

The processing unit 12 performs various types of processing according to the present embodiment. The various types of processing described as being performed by the CBSD 110 in the above description of the first embodiment and the processing described as being performed by the CBSD 110 in the description with reference to Figs. 7 to 13 are performed by the processing unit 12.

For example, the processing unit 12 performs processing related to the various procedures described above, such as the registration procedure, the spectrum query procedure, or the spectrum grant procedure, with the SAS 130.

In the registration procedure, the spectrum query procedure, or the spectrum grant procedure, the processing unit 12 transmits to the SAS 130 grouping parameters included in a request for the procedure. The processing unit 12 can receive grouping configurations as a response. The processing unit 12 performs processing according to the content of the grouping configurations. For example, it checks whether the SAS 130 supports the group notified in the grouping parameters, and if the SAS 130 supports, know that this group is recognized by the SAS 130. The processing unit 12 checks whether the SAS 130 supports the interference margin reallocation policy notified in the grouping parameters. If the SAS 130 does not support the group or the interference margin allocation policy, the processing unit 12 receives the allocation of an interference margin on a per-grant basis as a CBSD not belonging to a group in the IAP processing in the SAS 130.

Each processing block of the SAS 130 and the CBSD 110 is configured by a hardware circuit, software (programs, etc.), or both. The storage unit 35 and the storage unit 15 are each configured by any storage device such as a memory device, a magnetic storage device, or an optical disc. The storage unit 35 and the storage unit 15 may be externally connected to the SAS 130 and the CBSD 110 via wire or wirelessly, respectively, rather than inside the SAS 130 and the CBSD 110. The transmission unit 34 and the reception unit 31 in the SAS 130, and the transmission unit 14 and the reception unit 11 in the CBSD 110 may include one or more network interfaces depending on the number or types of connectable networks.

As described above, according to the present embodiment, even if the interference margin reallocation policy of the group to which the CBSD belongs is changed, the change can be quickly reflected in the SAS. Further, even if different SAS implementation or action is required for the SAS for each of a plurality of CBSD users in relation to the interference margin reallocation policy, or even if different SAS implementation or action is required depending on the location or the like of each CBSD user, such requirements can be easily met. Therefore, there is no problem in terms of interworking and interoperability between the SAS and the CBSD.

<Second Embodiment>

In the first embodiment, the communication system for CBRSs is mainly assumed as the target of the present invention, while in a second embodiment, a 6 GHz band AFC system is assumed as the target of the present invention. However, the present invention is not limited to application to the 6 GHz band AFC system, and can be applied to other types of communication systems. The block diagram of the communication system illustrated in Fig. 14 is also used as the block diagram of the communication system according to the second embodiment. The communication control device 130 illustrated in Fig. 14 corresponds to an AFC system, and the communication device 110 illustrated in Fig. 14 corresponds to a standard power access point (SPAP) and a fixed client device (FCD), which will be described later.

In the second embodiment, a group subjected to interference margin allocation includes at least one set of communication devices that perform cooperative communication, and an interference margin reallocation policy is to allocate an interference margin among the communication devices in the set in order to mitigate cumulative interference that may be given to other systems by the cooperative communication. The present embodiment is mainly assumed to be applied to protection of existing systems implemented by an AFC system for unlicensed access to the US 6 GHz band.

The 6 GHz band AFC system is typically a type of frequency access system deployed on cloud, similar to an SAS for CBRSs. In order to protect a fixed service receiver, which is a protected entity, the AFC system calculates and configures co-channel/adjacent channel exclusion zones around the FS receiver antenna, with an interference-to-noise ratio (I/N) of -6 dB as a protection reference value.

More specifically, the AFC system typically provides a plurality of zones for each FS receiver, and the maximum EIRP permitted for interference sources is different in each zone. A standard power access point (SPAP) and fixed client device (FCD) (hereinafter collectively referred to as standard power device (SPD)) corresponding to the communication device 110 notifies the AFC system of its own device's location information before starting to use radio waves, thereby requesting a list of frequencies (channels) that are available to the SPD at the location indicated by the location information. The AFC System identifies the zone to which the SPD belongs based on the location information received from the requesting SPD. The AFC system generates a list including one or more sets of frequency and a maximum transmission power that are available to the SPD, based on the identified zone, and transmits the generated list to the SPD.

Fig. 15 illustrates an example of a co-channel/adjacent channel exclusion zone for protection of an FS receiver 210 (protected entity). The co-channel/adjacent channel exclusion zone is expressed by two or more contour lines. Each contour line corresponds to the maximum acceptable transmission power of the SPD (e.g., EIRP or PSD). In the area within each contour line, the use of the maximum transmission power corresponding to the contour line is prohibited. For example, in the area between a contour line (21 dBm) and a contour line (24 dBm), the use of a transmission power of up to 21 dBm is allowed. Basically, the most outer contour line (36 dBm) corresponds to the maximum transmission power legally stipulated for the SPD (communication device). In the area within the innermost contour line (21 dBm), secondary use of the frequency is prohibited. Typically, the AFC system compares such exclusion zone information with the location information (and location uncertainty) of the SPD to identify the maximum transmission power that is acceptable on the same channel as and channels adjacent to the frequency used by the FS receiver 210.

Here, in the calculation and configuration of the exclusion zone based on the above-described interference-to-noise ratio (I/N), the existing AFC system only considers single-entry interference, and does not consider aggregate interference like CBRS. A reason for this is that unlicensed devices usually use technologies such as Carrier Sense Multiple Access/Collision Avoidance (CSMA/CA) or Listen Before Talk (LBT) to perform frequency access, so that there is a low possibility that a plurality of communication devices will simultaneously emit radio waves around the FS receiver. Another reason is that although a plurality of communication devices far away from each other can simultaneously emit radio waves, interference from communication devices closer to the FS receiver dominates.

However, in the wireless local area network (LAN) standard currently being standardized by the IEEE 802.11 Task Group be (TGbe), a technology called Multi-AP coordination, in which a plurality of access points coordinate to emit radio waves (i.e., emit radio waves simultaneously), is being considered. 3GPP has previously standardized a technology called Coordinated Multi-Point transmission (CoMP). Thus, it is entirely possible that a plurality of gNBs using NR-Unlicensed technology will implement CoMP in the 6 GHz band for purposes such as improving the reliability of wireless sections in unlicensed bands. When such cooperative communication is performed by a plurality of communication devices, the reason why the existing AFC system does not consider cumulative interference as described above no longer holds true, so that the impact of cumulative interference in the FS receiver will be significant if the existing protection scheme is used. This may result in insufficient protection of the FS receiver.

In the present embodiment, the above-described problem is solved by allocating an interference margin to a group (eIMG) in the AFC system and reallocating the interference margin among SPDs (communication devices) in the eIMG according to an interference margin reallocation policy. The interference margin reallocation policy in the present embodiment is that each SPD self-adjusts the maximum transmission power based on the number of SPDs in the same group (eIMG) (more specifically, the number of SPDs located in an exclusion zone). In other words, instead of the AFC system determining the maximum transmission power of each SPD in a group, each SPD autonomously adjusts the maximum transmission power based on the number of SPDs.

Fig. 16 illustrates a basic sequence of an operation according to the present embodiment.

First, to access the AFC system from an SPD through cooperative communication by two or more SPDs, an SPD user or an installer configures a group (eIMG) for the two or more SPDs. The method of configuring the group is the same as in the first embodiment. After the eIMG is configured, each SPD transmits information including the location of its own device and the like to the AFC system (S201). The information to be transmitted may include grouping parameters. The location of the device may be included in a GroupParam object in the grouping parameters. When receiving the grouping parameters, the AFC system 130 may transmit grouping configurations as a response.

The AFC system (communication control device) generates a list of first available frequencies (channels) for each SPD in the eIMG based on the location information and the like of the SPD (S202). The list to be generated is determined based on single-station interference from the SPD and the exclusion zone of the FS receiver. Single station interference refers to interference that is given from a single device (SPD) alone to an FS receiver. As described above, cochannel/adjacent channel exclusion zones are expressed by a plurality of contour lines. These contour lines are calculated in consideration of only single-station interference, as described above. The AFC system compares such exclusion zone information with the location information of the SPD (and location uncertainty) to identify the maximum transmission power (first transmission power) that is acceptable on the same channel or channels adjacent to the frequency used by the FS receiver. The first available frequencies in the list are associated with acceptable maximum transmission powers (e.g., EIRPs) thus identified.

When receiving available spectrum queries from the SPDs (S203), the AFC system generates a list of second available frequencies (channels) for each SPD based on the number of SPDs in the eIMG (NSPD) and the list of first available frequencies (channels) (S204). The list of second available frequencies is a list to which information for identifying the frequencies (channels) for which the SPD needs to adjust the transmission power to perform cooperative communication and information for identifying the number of SPDs that belong to the same group and are located in exclusion zones are added to the list of first available frequencies (details will be described later). The AFC system transmits the list of second available frequencies (channels) to each SPD (S205).

The SPD selects a frequency (channel) to be used from among the list of second available frequencies (channels), and if the selected frequency (channel) corresponds to information indicating adjustment of transmission power, adjusts the transmission power based on the number of SPDs that belong to the same group and are located in exclusion zones. The SPD starts emitting radio waves using the selected frequency (channel) based on the adjusted power (S206).

[Details of Processing in which AFC System Recognizes Number of SPDs (NSPDs) in eIMG]

In the above-described step S204, the AFC system needs to recognize the number of SPDs (NSPD) in the eIMG. However, if the SPDs that perform cooperative communication each access the AFC system at any timing (independently), the AFC system cannot correctly recognize the number (NSPD). In other words, it is not possible to correctly recognize how many SPDs actually belong to the eIMG, or how many more SPDs may be added later. In this case, the processing load of the AFC system increases. Accordingly, SPDs belonging to the same eIMG may simultaneously access the AFC system via a proxy or the like.

As another method, when the SPD configures eIMG information in a GroupParam object (see Fig. 8), the number of SPDs belonging to an eIMG or a list of identifiers for identifying the SPDs belonging to an eIMG may be included. An example of an identifier for identifying an SPD is a combination of an authentication ID such as an FCC ID and a serial number. This allows the AFC system to uniquely recognize the number of SPDs (NSPDs) belonging to the same eIMG even when the SPD accesses the AFC system at any time.

[Method of Generating List of Second Available Frequencies (Channels)]

At the time of receiving an available spectrum query from an SPD, the AFC system does not know which frequency (channel) the SPD will select and use from the list of first available frequencies (channels). Therefore, each SPD is configured to identify, from among the frequencies (channels) available in the list of first available frequencies (channels), the frequencies (channels) for which it is necessary to adjust the transmission power when the plurality of SPDs communicate cooperatively.

More specifically, the AFC system determines whether or not transmission power adjustment is necessary based on an exclusion zone for protection of the FS receiver and the location information of the SPD. Since the maximum transmission power is limited in the entire area within the most outer contour line, that area can be considered as an area where the SPD may give harmful interference to the FS receiver by emitting radio waves. As described above, the contour lines are calculated in consideration of only single-station interference. Specifically, it is possible to determine whether or not further transmission power adjustment is necessary for cooperative communication based on whether or not any communication device is located in the area within the most outer contour line, or whether or not the location of a communication device (or an area indicated by location uncertainty) overlaps with the area within the most outer contour line. In other words, when the locations of a plurality of SPDs that perform cooperative communication overlap with the area within the most outer contour line, the AFC system determines that further adjustment of the transmission power is necessary. If only one SPD is present in the area within the most outer contour line and all the other SPDs are present in areas outside the most outer contour line, it is determined that no further adjustment of the transmission power is necessary. If all SPDs are in areas outside the most outer contour line, it is also determined that no further adjustment of the transmission power is necessary.

The AFC system associates, for each of the frequencies (channels) available in the list of first available frequencies (channels), information indicating whether or not transmission power adjustment is necessary and, if necessary, information for identifying the number of SPDs that belong to the same group and are located in exclusion zones. Thus, a list of second available frequencies (channels) is generated. In other words, when a plurality of SPDs communicate cooperatively (simultaneous transmission), the list of second available frequencies (channels) is a list obtained by processing the list of first available frequencies (channels) so that each SPD can identify frequencies (channels) for which transmission power adjustment is necessary and the number of SPDs that belong to the same group and are located in exclusion zones.

[Method of Determining Transmission Power When Using Frequency Selected by SPD from among List of Second Available Frequencies (Channels)]

When an SPD selects a frequency (channel) from among the list of second available frequencies (channels) acquired from the AFC system, the SPD determines whether the frequency (channel) or frequency range is associated with information indicating the necessity for transmission power adjustment. If the selected frequency (channel) or frequency range is associated with the information indicating the necessity for adjustment, the SPD adjusts the associated maximum transmission power (first transmission power) based on the number of SPDs (NSPDs) that belong to the same group and are located in exclusion zones. The SPD uses the frequency or frequency range with the adjusted transmission power. An example of expression for adjusting the value of the transmission power is given below:

$$\text{If } C_{Selected} \text{ requires power adjustment:}$$

$$P_{max\text{-}tx,\ operating}\ (C_{Selected})\ [dBm] = P_{max\text{-}tx}(C_{Selected})\ [dBm] - 10\ log_{10}(N_{SPD})$$

$$\text{else}$$

$$P_{max\text{-}tx,\ operating}\ (C_{Selected})\ [dBm] = P_{max\text{-}tx}(C_{Selected})\ [dBm]$$

$$\text{end}$$

$$C_{Selected}:\ \text{Selected Frequency (Channel)}$$

$$P_{max\text{-}tx}(C):\ \text{Maximum Transmission Power associated with Frequency (Channel) C}$$

$$P_{max\text{-}tx,\ operating}(C):\ \text{Operating Maximum Transmission Power on Frequency (Channel) C}$$

In CBRS and the like handled in the first embodiment, if cumulative interference is considered, when the number of communication devices (CBSDs) changes, it is usually necessary to perform processing related to interference control again in the SAS (communication control device). For example, it may be necessary to determine the frequencies available to the CBSDs by recalculation. However, in the second embodiment, even when the number of SPDs changes, the AFC system only needs to perform processing of updating the information indicating whether or not transmission power adjustment is necessary in the list of second available frequencies (channels) and the information for identifying the number of SPDs that belong to the same group and are located in exclusion zones. Recalculation to determine available frequencies (channels) is not necessary. Therefore, the second embodiment is expected to contribute to suppressing an increase in the calculation load.

Fig. 17 is a diagram illustrating a specific example of the operation of the second embodiment. An FS receiver 210, which is a protected entity, and communication devices (SPDs) A, B, C, D, and E are illustrated. The communication devices A to C belong to a group (eIMG) that performs cooperative communication, and information indicating that the number of SPDs in the eIMG is three has been notified to the AFC system. The communication devices D and E do not belong to the eIMG. The communication devices B, C, and E are located in the area within the most outer contour line L1. The communication device A and the communication device D are located outside the most outer contour line. Meanwhile, the AFC system generates a list of second available frequencies for each of the communication devices A to E as follows.

(Communication Device A)

The AFC system does not change the list of first available frequencies generated for the communication device A, but uses the list of first available frequencies as a list of second available frequencies.

(Communication Device B)

Among the frequencies in the list of first available frequencies generated for the communication device B, the AFC system assigns information indicating that it is necessary to adjust the transmission power to the same frequency as and/or frequencies adjacent to the channel used by the FS receiver. Thus, a list of second available frequencies is generated. As the information indicating that it is necessary to adjust the transmission power, information indicating the number of communication devices located in at least the area within the most outer contour line L1 is assigned. The information indicating the number of communication devices may be, for example, information indicating a numerical value of 2. The numerical value 2 is the number of communication devices located in the area within the most outer contour line L1 among communication devices that perform cooperative communication including the own device (communication device B). The information indicating the number of communication devices may be 1, not including the own device.

(Communication Device C)

Among the frequencies in the list of first available frequencies generated for the communication device C, the AFC system assigns information indicating that it is necessary to adjust the transmission power to the same frequency as and/or frequencies adjacent to the channel used by the FS receiver. As the information indicating that it is necessary to adjust the transmission power, information indicating the number of communication devices located in at least the area within the most outer contour line L1 is assigned. A specific example of this information is similar to the example in the case of the communication device B.

(Communication Device D)

The AFC system does not change the list of first available frequencies generated for the communication device D, but uses the list of first available frequencies as a list of second available frequencies.

(Communication Device E)

The AFC system does not change the list of first available frequencies generated for the communication device E, but uses the list of first available frequencies as a list of second available frequencies.
Although there is only one FS receiver in the example illustrated in Fig. 17, the AFC system can generate a list of second available frequencies in a similar manner where there are a plurality of FS receivers. The AFC system transmits the list of second available frequencies thus generated to each communication device.
If cooperative communication is performed using a frequency for which transmission power adjustment is necessary, in the example of Fig. 17, the communication device A can use the maximum transmission power, which remains not changed, indicated in the list of second available frequencies, without further transmission power adjustment. The communication devices B and C reduce the maximum transmission power indicated in the list of second available frequencies by $10\log10(2) = 3$ dB, and use the reduced transmission power.
The AFC system may transmit the list of second available frequencies to the communication device in the following scheme.

- Transmit the list of second available frequencies instead of the list of first available frequencies.
- Transmit both the list of first available frequencies and the list of second available frequencies.
- Transmit the amount of adjustment of transmission power included in GroupConfigInfo separately from the list of first available frequencies.

The block diagram of the communication system in the present embodiment is the same as the block diagram of Fig. 14. Differences from the first embodiment will be described.
As a premise, it is prescribed that among a plurality of SPDs (communication devices) 110 belonging to a group (eIMG), an SPD 110 located in an exclusion zone for protection of an FS receiver (protected entity) transmits radio waves with a first transmission power that is equal to or less than a maximum acceptable transmission power depending on its location within the exclusion zone. The first transmission power is a transmission power at which an amount of interference that is given to the FS receiver for radio waves transmitted alone within an exclusion zone is equal to or less than an acceptable amount of interference. The maximum acceptable transmission power is associated with a location within the exclusion zone.
The processing unit 32 of the AFC system (communication control device) 130 performs the various types of processing described as being performed by the AFC system in the above description of the second embodiment and the processing described as being performed by the AFC system in the description with reference to Fig. 15 to 17. The processing unit 32 receives the location information of the SPD 110 from the SPD 110 and determines frequencies available to the SPD 110. The processing unit 32 determines whether a plurality of SPDs 110 belonging to a group (eIMG) are located in exclusion zones. If two or more SPDs are located in exclusion zones among the SPDs 110 that belong to the group (eIMG) and have been determined to have the same available frequencies, the processing unit 32 determines that it is necessary to adjust the first transmission power of the two or more SPDs for the use of the frequencies. If it is determined that it is necessary to adjust the first transmission power, the processing unit 32 grasps the number of SPDs belonging to the group that are located in exclusion zones with respect to the available frequencies. The processing unit 32 transmits information for identifying the grasped number of SPDs to the SPDs belonging to the group that are located in exclusion zones. Specifically, the available frequencies in the list are associated with information for identifying the number of SPDs and information indicating that transmission power adjustment is necessary (information instructing the transmission power adjustment), and the list is transmitted to the SPDs.

The processing unit 32 determines that for SPDs 110 located outside the exclusion zones, it is not necessary to adjust the first transmission power for any of the available frequencies.

The storage unit 15 of the SPD 110 stores information indicating the number of SPDs in the group to which the SPD belongs. This number of SPDs does not necessarily correspond to the number of SPDs located in exclusion zones. There may be a plurality of groups, in which case information for identifying the number of SPDs for each group is stored.

The reception unit 11 of the SPD 110 receives a list of frequencies available to the SPD 110 from the AFC system 130. The available frequencies are associated with a transmission power (first transmission power) according to the location of the SPD 110 and information indicating whether or not transmission power adjustment (modification) is necessary. The information indicating that adjustment is necessary is associated with a frequency in the list in the AFC system 130 when the SPD 110 is located in an exclusion zone for protection of the protected entity. Furthermore, in the list, the frequency associated with information indicating that adjustment is necessary may be associated with information for identifying the number of SPDs (first communication devices) that are located in exclusion zones and belong to the same group (eIMG) as the SPD 110.

The processing unit 12 performs various types of processing described as being performed by the SPD in the above description of the second embodiment and the processing described as being performed by the SPD in the description with reference to Fig. 15 to 17. For example, the processing unit 12 determines a frequency to be used from among available frequencies based on a list received from the AFC system 130. The processing unit 12 also identifies the transmission power (first transmission power) associated with the determined frequency. If information indicating that transmission power adjustment is necessary is associated with the determined frequency, the identified transmission power (first transmission power) is adjusted based on the number of SPDs that belong to the same group and are located in exclusion zones. Information for identifying the number of SPDs is associated with the determined frequency, and the number of SPDs is identified based on that information. If it is known in advance that all SPDs belonging to the same group are located in exclusion zones, the number of SPDs stored in advance in the storage unit 15 may be used.

The transmission unit 14 transmits radio signals with a second transmission power, which is the adjusted first transmission power, within an exclusion zone. Meanwhile, the processing unit 12 may perform cooperative communication in which the processing unit 12 transmits radio signals simultaneously with the other SPDs belonging to the group.

As described above, according to the present embodiment, even when the number of SPDs in the group changes, the AFC system only needs to perform processing of updating at least one of the information indicating whether or not transmission power adjustment is necessary in the list of second available frequencies (channels) and the information for identifying the number of SPDs that belong to the same group and are located in exclusion zones. Recalculation to determine available frequencies (channels) in the SPD is not necessary. Therefore, it is possible to suppress an increase in the calculation load of the AFC system.

The above-described embodiments are examples for embodying the present disclosure, and the present disclosure can be implemented in various other forms. For example, various modifications, substitutions, omissions, or combinations thereof are possible without departing from the spirit and scope of the present disclosure. Forms representing such modifications, substitutions, omissions, and the like also fall within the scope of the present disclosure as well as the scopes of the invention as set forth in the scope of claims and equivalents thereof.

In addition, the effects of the present disclosure described herein are merely exemplary and may have other effects.

The present disclosure may have the following configurations.

[Item 1]

A communication control device including:

a processing unit that:

determines a first interference margin that is an amount of interference that is acceptable to be given to a protected entity by at least one group of a plurality of communication devices, based on a cumulative acceptable amount of interference of the protected entity; and
determines a plurality of second interference margins that are amounts of interference that are acceptable to be given to the protected entity by the plurality of communication devices by allocating the first interference margin among the plurality of communication devices in the group.

[Item 2]

The communication control device according to Item 1, wherein

each of the plurality of communication devices is capable of transmitting beams in a plurality of beam patterns, and the processing unit determines, for each of the plurality of communication devices, a combination of beam patterns such that an amount of interference given from the plurality of communication devices to the protected entity is equal to or less than the second interference margin.

[Item 3]

The communication control device according to Item 2, wherein the processing unit further determines transmission powers of the beam patterns in the combination.

[Item 4]

The communication control device according to any one of Items 1 to 3, wherein the processing unit determines the plurality of first interference margins for the plurality of groups so that a sum of the plurality of first interference margins is equal to or less than the cumulative acceptable interference amount of the protected entity.

[Item 5]

The communication control device according to Item 3 or 4, wherein

each of the plurality of communication devices in the plurality of groups is capable of transmitting beams in a plurality of beam patterns,
the processing unit determines, for each of the groups, a combination of beam patterns that maximizes a sum of amounts of interference for the plurality of communication devices, and
when a sum of first maximum interference margins of the groups, each first maximum interference margin being a maximum sum of amounts of interference for each group, exceeds the cumulative acceptable interference amount, the processing unit adjusts the first maximum interference margins of the plurality of groups so that a sum of second maximum interference margins that are the adjusted first interference margins is equal to or less than the cumulative acceptable interference amount, the second maximum interference margins being the first interference margins, and determines, for each of groups, the combination of beam patterns for the plurality of communication devices such that an amount of interference given from the communication device to the protected entity is equal to or less than the second maximum interference margin.

[Item 6]

The communication control device according to Item 5, wherein the processing unit further determines transmission powers of the beam patterns in the combination.

[Item 7]

The communication control device according to any one of Items 1 to 6, wherein the group of the plurality of communication devices is a group of a plurality of communication devices that perform cooperative communication by simultaneously transmitting radio waves.

[Item 8]

The communication control device according to Item 7, wherein it is prescribed that a communication device located in an exclusion zone for protection of the protected entity, among the plurality of communication devices belonging to the group, transmits a radio signal with a first transmission power according to a location of the communication device, and
when the number of communication devices located in the exclusion zone belonging to the group, among the plurality of communication devices, is two or more, the processing unit determines that it is necessary to adjust the first transmission powers of the two or more communication devices.

[Item 9]

The communication control device according to Item 8, wherein the first transmission power according to the location of the communication device is a transmission power with which the amount of interference given to the protected entity when the communication device alone transmits radio waves at the location of the communication device is equal to or less than the cumulative acceptable interference amount.

[Item 10]

The communication control device according to Item 8 or 9, wherein when the processing unit determines that it is necessary to adjust the first transmission power, the processing unit transmits information for identifying the number of the communication devices located in the exclusion zone to the communication device located in the exclusion zone.

[Item 11]

The communication control device according to Item 10, wherein the processing unit transmits to the communication device information instructing the communication device to adjust the first transmission power based on the number of the communication devices.

[Item 12]

The communication control device according to any one of Items 8 to 11, wherein the processing unit determines that it is not necessary to adjust the first transmission power for a communication device that is outside the exclusion zone among the plurality of communication devices belonging to the group.

[Item 13]

The communication control device according to any one of Items 1 to 12, wherein the processing unit receives identification information for identifying a group to which the plurality of communication devices belong, and classifies the plurality of communication devices into one or more of groups based on the identification information.

[Item 14]

The communication control device according to any one of Items 1 to 13, wherein the processing unit receives policy information on allocation of an interference margin among the plurality of communication devices of the group from at least one of the plurality of communication devices belonging to the group, and determines the second interference margin by allocating the first interference margin among the plurality of communication devices based on the policy information.

[Item 15]

A communication control method including:

determining a first interference margin that is an amount of interference that is acceptable to be given to a protected entity by at least one group of a plurality of communication devices, based on a cumulative acceptable amount of interference of the protected entity; and
determining a plurality of second interference margins that are amounts of interference that are acceptable to be given to the protected entity by the plurality of communication devices by allocating the first interference margin among the plurality of communication devices in the group.

[Item 16]

A communication device that belongs to a group including a plurality of first communication devices and is one of the plurality of first communication devices, the communication device including:

a processing unit that adjusts, when the communication device is located in an exclusion zone for protection of a protected entity, a first transmission power determined according to a location of the communication device in the exclusion zone, based on the number of first communication devices that belong to the group and are located in the exclusion zone; and

a transmission unit that transmits a radio signal with a second transmission power that is the adjusted first transmission power.

[Item 17]

The communication device according to Item 16, further including a reception unit that receives a list of frequencies available to the communication device, wherein the processing unit determines whether information indicating a necessity for adjustment of the first transmission power is associated with the available frequencies in the list, and when the information indicating the necessity for adjustment of the first transmission power is associated with the available frequencies in the list, adjusts the first transmission power.

[Item 18]

The communication device according to Item 17, wherein

information for identifying the number of first communication devices located in the exclusion zone, among the first communication devices belonging to the group, is associated with a frequency associated with the information indicating the necessity for adjustment of the first transmission power, among the available frequencies in the list, and the processing unit identifies the number of first communication devices located in the exclusion zone among the first communication devices belonging to the group, based on the information for identifying the number of first communication devices.

[Item 19]

The communication device according to Item 16, wherein the processing unit controls cooperative communication for transmitting the radio signal simultaneously with the other first communication devices belonging to the group.

[Item 20]

A communication method performed by a communication device that belongs to a group including a plurality of first communication devices and is one of the plurality of first communication devices, the communication method including:

a processing unit that adjusts, when the communication device is located in an exclusion zone for protection of a protected entity, a first transmission power determined according to a location of the communication device in the exclusion zone, based on the number of first communication devices that belong to the group and are located in the exclusion zone; and

transmitting a radio signal with a second transmission power that is the adjusted first transmission power.

[Reference Signs List]

11 Reception unit
12 Processing unit
13 Control unit
14 Transmission unit
15 Storage unit
31 Reception unit
32 Processing unit
33 Control unit
34 Transmission unit
35 Storage unit
110, 110A, 110B, 110C, A to D Communication device
120 Terminal

130, 130A, 130B Communication control device
200, 210 Protected entity

**Claims**

1. A communication control device comprising:
   a processing unit that:

   determines a first interference margin that is an amount of interference that is acceptable to be given to a protected entity by at least one group of a plurality of communication devices, based on a cumulative acceptable amount of interference of the protected entity; and
   determines a plurality of second interference margins that are amounts of interference that are acceptable to be given to the protected entity by the plurality of communication devices by allocating the first interference margin among the plurality of communication devices in the group.

2. The communication control device according to claim 1, wherein

   each of the plurality of communication devices is capable of transmitting beams in a plurality of beam patterns, and
   the processing unit determines, for each of the plurality of communication devices, a combination of beam patterns such that an amount of interference given from the plurality of communication devices to the protected entity is equal to or less than the second interference margin.

3. The communication control device according to claim 2, wherein the processing unit further determines transmission powers of the beam patterns in the combination.

4. The communication control device according to claim 1, wherein the processing unit determines the plurality of first interference margins for the plurality of groups so that a sum of the plurality of first interference margins is equal to or less than the cumulative acceptable interference amount of the protected entity.

5. The communication control device according to claim 3, wherein

   each of the plurality of communication devices in the plurality of groups is capable of transmitting beams in a plurality of beam patterns,
   the processing unit determines, for each of the groups, a combination of beam patterns that maximizes a sum of amounts of interference for the plurality of communication devices, and
   when a sum of first maximum interference margins of the groups, each first maximum interference margin being a maximum sum of amounts of interference for each group, exceeds the cumulative acceptable interference amount, the processing unit adjusts the first maximum interference margins of the plurality of groups so that a sum of second maximum interference margins that are the adjusted first interference margins is equal to or less than the cumulative acceptable interference amount, the second maximum interference margins being the first interference margins, and
   determines, for each of groups, the combination of beam patterns for the plurality of communication devices such that an amount of interference given from the communication device to the protected entity is equal to or less than the second maximum interference margin.

6. The communication control device according to claim 5, wherein the processing unit further determines transmission powers of the beam patterns in the combination.

7. The communication control device according to claim 1, wherein the group of the plurality of communication devices is a group of a plurality of communication devices that perform cooperative communication by simultaneously transmitting radio waves.

8. The communication control device according to claim 7, wherein

   it is prescribed that a communication device located in an exclusion zone for protection of the protected entity, among the plurality of communication devices belonging to the group, transmits a radio signal with a first transmission power according to a location of the communication device, and

when the number of communication devices located in the exclusion zone belonging to the group, among the plurality of communication devices, is two or

more, the processing unit determines that it is necessary to adjust the first transmission powers of the two or more communication devices.

9. The communication control device according to claim 8, wherein the first transmission power according to the location of the communication device is a transmission power with which the amount of interference given to the protected entity when the communication device alone transmits radio waves at the location of the communication device is equal to or less than the cumulative acceptable interference amount.

10. The communication control device according to claim 8, wherein when the processing unit determines that it is necessary to adjust the first transmission power, the processing unit transmits information for identifying the number of the communication devices located in the exclusion zone to the communication device located in the exclusion zone.

11. The communication control device according to claim 10, wherein the processing unit transmits to the communication device information instructing the communication device to adjust the first transmission power based on the number of the communication devices.

12. The communication control device according to claim 8, wherein the processing unit determines that it is not necessary to adjust the first transmission power for a communication device that is outside the exclusion zone among the plurality of communication devices belonging to the group.

13. The communication control device according to claim 1, wherein the processing unit receives identification information for identifying a group to which the plurality of communication devices belong, and classifies the plurality of communication devices into one or more of groups based on the identification information.

14. The communication control device according to claim 1, wherein the processing unit receives policy information on allocation of an interference margin among the plurality of communication devices of the group from at least one of the plurality of communication devices belonging to the group, and determines the second interference margin by allocating the first interference margin among the plurality of communication devices based on the policy information.

15. A communication control method comprising:

determining a first interference margin that is an amount of interference that is acceptable to be given to a protected entity by at least one group of a plurality of communication devices, based on a cumulative acceptable amount of interference of the protected entity; and

determining a plurality of second interference margins that are amounts of interference that are acceptable to be given to the protected entity by the plurality of communication devices by allocating the first interference margin among the plurality of communication devices in the group.

16. A communication device that belongs to a group including a plurality of first communication devices and is one of the plurality of first communication devices, the communication device comprising:

a processing unit that adjusts, when the communication device is located in an exclusion zone for protection of a protected entity, a first transmission power determined according to a location of the communication device in the exclusion zone, based on the number of first communication devices that belong to the group and are located in the exclusion zone; and

a transmission unit that transmits a radio signal with a second transmission power that is the adjusted first transmission power.

17. The communication device according to claim 16, further comprising a reception unit that receives a list of frequencies available to the communication device,

wherein the processing unit determines whether information indicating a necessity for adjustment of the first transmission power is associated with the available frequencies in the list, and when the information indicating the necessity for adjustment of the first transmission power is associated with the available frequencies in the list, adjusts the first transmission power.

18. The communication device according to claim 17, wherein

information for identifying the number of first communication devices located in the exclusion zone, among the first communication devices belonging to the group, is associated with a frequency associated with the first information,
among the available frequencies in the list, and
the processing unit identifies the number of first communication devices located in the exclusion zone among the first communication devices belonging to the group, based on the information for identifying the number of first communication devices.

19. The communication device according to claim 16, wherein the processing unit controls cooperative communication for transmitting the radio signal simultaneously with the other first communication devices belonging to the group.

20. A communication method performed by a communication device that belongs to a group including a plurality of first communication devices and is one of the plurality of first communication devices, the communication method comprising:

a processing unit that adjusts, when the communication device is located in an exclusion zone for protection of a protected entity, a first transmission power determined according to a location of the communication device in the exclusion zone, based on the number of first communication devices that belong to the group and are located in the exclusion zone; and
transmitting a radio signal with a second transmission power that is the adjusted first transmission power.

Fig. 1

Fig. 2

Fig. 3

Fig. 4

Fig. 5

Fig. 6

EP 4 492 846 A1

120

120

110

T101

CALCULATE
COMMUNICATION
PARAMETERS TO BE USED
BY COMMUNICATION DEVICE
OF SECONDARY SYSTEM

T103

T102

NOTIFY COMMUNICATION
DEVICE OF SECONDARY
SYSTEM OF
COMMUNICATION
PARAMETERS

ACQUIRE COMMUNICATION
PARAMETERS TO BE USED BY
COMMUNICATION DEVICES (BASE
STATION AND TERMINAL) TO BE
USED BY SECONDARY SYSTEM

T104

CONFIGURE
COMMUNICATION
PARAMETERS TO BE USED
BY COMMUNICATION DEVICE
(BASE STATION) ITSELF

T106

T105

T106

ACQUIRE COMMUNICATION
PARAMETERS TO BE
USED BY COMMUNICATION
DEVICE (TERMINAL) OF
SECONDARY SYSTEM

ACQUIRE COMMUNICATION
PARAMETERS TO BE
USED BY COMMUNICATION
DEVICE (TERMINAL) OF
SECONDARY SYSTEM

NOTIFY OF COMMUNICATION
PARAMETERS TO BE USED BY
TERMINAL UNDER CONTROL OF
COMMUNICATION DEVICE (BASE
STATION) ITSELF

T107

CONFIGURE COMMUNICATION
PARAMETERS TO BE USED BY
COMMUNICATION DEVICE
(TERMINAL) ITSELF

CONFIGURE COMMUNICATION
PARAMETERS TO BE USED BY
COMMUNICATION DEVICE
(TERMINAL) ITSELF

T107

T108

PERFORM COMMUNICATION WITH
ANOTHER COMMUNICATION
DEVICE (TERMINAL) OF
SECONDARY SYSTEM

PERFORM COMMUNICATION WITH
ANOTHER COMMUNICATION
DEVICE (TERMINAL) OF
SECONDARY SYSTEM

T108

47

Fig. 7

Fig. 8

EP 4 492 846 A1

```
"groupingParam": [
  {
    /// GroupParam OBJECT #1
  },
  {
    /// GroupParam OBJECT #2
  },
  ...
  {
    /// GroupParam OBJECT #N
  }
]
```

```
"groupingConfig": [
  {
    /// GroupConfig OBJECT #1
  },
  {
    /// GroupConfig OBJECT #2
  }
  ...
  {
    /// GroupParam OBJECT #N
  }
]
```

SAS 130

CBSD 110

Fig. 9

Fig. 10

CBSD 110                                          SAS 130

Grouping Parameters:S101

Grouping Configuration:S102

GRANT REQUEST: S103
                                                        S104

                                        CPAS/IAP ETC.

BEAM PATTERN AND
EIRP/conducted power: S105

S106

EMIT RADIO
WAVES

Fig. 11

Fig. 12

Fig. 13

Fig. 14

EP 4 492 846 A1

Fig. 15

Fig. 16

**SPD 110**                                                          **AFC system 130**

LOCATION INFORMATION AND
THE LIKE OF SPD: S201

S202

GENERATE LIST OF
FIRST AVAILABLE
FREQUENCIES

AVAILABLE SPECTRUM QUERY: S203

S204

GENERATE LIST OF
SECOND AVAILABLE
FREQUENCIES

LIST OF SECOND AVAILABLE
FREQUENCIES: S205

S206

ADJUST TRANSMISSION
POWER AND EMIT
RADIO WAVES

Fig. 17

## INTERNATIONAL SEARCH REPORT

| | International application No. |
|---|---|
| | **PCT/JP2023/008971** |

**A. CLASSIFICATION OF SUBJECT MATTER**

*H04W 16/14*(2009.01)i; *H04B 7/06*(2006.01)i; *H04W 16/28*(2009.01)i; *H04W 28/16*(2009.01)i; *H04W 52/24*(2009.01)i
FI: H04W16/14; H04W52/24; H04W16/28; H04W28/16; H04B7/06 152

According to International Patent Classification (IPC) or to both national classification and IPC

**B. FIELDS SEARCHED**

Minimum documentation searched (classification system followed by classification symbols)

H04W16/14; H04B7/06; H04W16/28; H04W28/16; H04W52/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/049992 A1 (SONY CORP.) 12 March 2020 (2020-03-12) paragraphs [0016]-[0020], [0027], [0107]-[0111], [0225]-[0257] | 1, 4, 13-15 |
| Y | | 2, 3 |
| A | | 5-12, 16-20 |
| Y | WO 2021/131913 A1 (SONY CORP.) 01 July 2021 (2021-07-01) paragraphs [0207]-[0209] | 2, 3 |
| A | | 5-12, 16-20 |
| A | EP 3920605 A1 (SONY GROUP CORP.) 08 December 2021 (2021-12-08) paragraphs [0036], [0037] | 1-20 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **02 May 2023** | **16 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/008971**

| Patent document cited in search report | | | Publication date (day/month/year) | Patent family member(s) | | | Publication date (day/month/year) |
|---|---|---|---|---|---|---|---|
| WO | 2020/049992 | A1 | 12 March 2020 | EP | 3849229 | A1 | |
| | | | | paragraphs [0016]-[0020], [0027], [0107]-[0111], [0224]-[0256] | | | |
| | | | | US | 2021/0329469 | A1 | |
| | | | | CN | 112640515 | A | |
| WO | 2021/131913 | A1 | 01 July 2021 | EP | 4084356 | A1 | |
| | | | | paragraphs [0213]-[0216] | | | |
| | | | | CN | 114830559 | A | |
| EP | 3920605 | A1 | 08 December 2021 | JP | 2022-523133 | A | |
| | | | | US | 2022/0078723 | A1 | |
| | | | | WO | 2020/156472 | A1 | |
| | | | | CN | 111526570 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 35503700 B